(19) Europäisches Patentamt
European Patent Office
Office européen des brevets

(11) EP 4 496 849 B1

(12) **EUROPEAN PATENT SPECIFICATION**

(45) Date of publication and mention of the grant of the patent:
**05.11.2025 Bulletin 2025/45**

(21) Application number: **23700728.1**

(22) Date of filing: **11.01.2023**

(51) International Patent Classification (IPC):
***C08L 25/14*** *(2006.01)* ***C08L 33/12*** *(2006.01)*
***C08L 53/02*** *(2006.01)*

(52) Cooperative Patent Classification (CPC):
(C-Sets available)
**C08L 25/14; C08L 33/12; C08L 53/025;**
C08F 212/08; C08L 2205/025; C08L 2205/03
(Cont.)

(86) International application number:
**PCT/EP2023/050522**

(87) International publication number:
**WO 2023/179925 (28.09.2023 Gazette 2023/39)**

(54) **IMPACT-MODIFIED BLENDS OF STYRENE-METHYL METHACRYLATE COPOLYMERS AND VINYLAROMATIC-OLEFINIC BLOCK COPOLYMERS**

SCHLAGZÄHMODIFIZIERTE MISCHUNGEN AUS STYROL-METHYLMETHACRYLAT-COPOLYMEREN UND VINYLAROMATISCHEN OLEFINBLOCKCOPOLYMEREN

MÉLANGES MODIFIÉS PAR IMPACT DE COPOLYMÈRES DE STYRÈNE-MÉTHACRYLATE DE MÉTHYLE ET DE COPOLYMÈRES EN BLOCS VINYLAROMATIQUES-OLÉFINIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.03.2022 EP 22163377**

(43) Date of publication of application:
**29.01.2025 Bulletin 2025/05**

(73) Proprietor: **INEOS Styrolution Group GmbH**
**60325 Frankfurt (DE)**

(72) Inventors:
- **ROWLETT, Jarrett R.**
**Oswego, Illinois 60543 (US)**
- **COCHRAN, Thomas W.**
**Wilmington, Illinois 60481 (US)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) References cited:
**WO-A1-2022/263445 JP-A- 2002 234 981**
**JP-A- 2005 023 267**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 496 849 B1

(52) Cooperative Patent Classification (CPC): (Cont.)

C-Sets
**C08L 25/14, C08L 53/025;**
**C08L 25/14, C08L 53/025, C08L 53/025;**
**C08L 33/12, C08L 53/025, C08L 53/025;**
**C08L 53/025, C08L 25/14;**
C08F 212/08, C08F 220/14

## Description

The invention relates to a molding composition comprising a styrene-methyl methacrylate copolymer (SMMA) and at least one vinylaromatic-olefinic block copolymer. These molding compositions and products therefrom have good mechanical properties and light stability while maintaining high clarity. The invention also relates to a process for the preparation of molding compositions and to thermoplastic molding compositions and shaped articles produced therefrom and to their use.

Styrene-ethylene/butylene block copolymers are known for years to provide effective modifiers to gain impact strength in blends with styrene-methyl methacrylate copolymers while still maintaining a good transparency and/or low haze.

JP 2005-023267 A (2005) discloses a resin composition comprising a copolymer mainly composed of styrene and methyl methacrylate and a styrene-ethylene/butylene-styrene copolymer, wherein the resin composition satisfies the relation $-3 < 0.101\,A - 0.121\,B < 1$, wherein the styrene content of the copolymer mainly composed of styrene and methyl methacrylate is A% by weight and the styrene content of the styrene copolymer is B% by weight.

JP 2002-234981 A discloses a resin composition comprising (a) 55 to 90 wt.-% of styrene-methyl methacrylate copolymer, (b) 10 to 45 wt.-% of high density polyethylene and (c) 5 to 20 parts by weight, based on 100 parts by weight of components (a) and (b), of an olefin-styrene block copolymer having a styrene content of ≥ 15 wt.-%.

It is an object of the present invention to provide a molding composition comprising styrene-methyl methacrylate copolymer (SMMA) and vinylaromatic-olefinic block copolymer with a good balance of stiffness and toughness, with a high light stability while maintaining a high transmittance and clarity. This combination of good mechanical and optical properties is desirable for many applications such as lighting and light covers blends as well as cap layers and protective covers, cap layers for sanitary applications, point of purchase displays, container holders, display holders. It is a further object of the invention to provide molding compositions having an improved processability (in particular in an extrusion process).

According to the invention, this object is achieved by providing a (thermoplastic) molding composition (P) according to the claims.

The invention relates to a molding composition (P) comprising (or consisting of) the components (a), (b), and (c):

(a) at least one random copolymer (a) made from 30 to 70 wt.-% of at least one vinylaromatic monomer (a11), in particular styrene, and 30 to 70 wt.-%, methyl methacrylate (a12);
(b) at least one block copolymer (b) which comprises:

at least one hard block H, comprising repeating units of vinyl aromatic monomers, in particular styrene, and
at least one elastomeric soft block $S_1$, comprising repeating units of olefinic monomers, preferably ethylene and at least one olefinic monomer having 3 to 10 carbon atoms,
and/or
at least one soft block $S_2$ comprising repeating units of olefinic monomers and vinylaromatic monomers, in particular ethylene, at least one olefinic monomer having 3 to 10 carbon atoms and styrene,
wherein the proportion of the repeating units of vinyl aromatic monomers - based on the entire block copolymer (b) - is from 25 to 85 wt.-%; and

(c) optionally one or more additive(s) and/or processing aid(s) (c);

wherein the total amount of components (a), (b), and (c) is 100 wt.-%.

The molding composition (P) comprises (or consists of):

(a) 30 to 82 wt.-% of at least one random copolymer (a) made from 30 to 70 wt.-% of at least one vinylaromatic monomer (a11), in particular styrene, and 30 to 70 wt.-%, methyl methacrylate (a12);
(b) 18 to 70 wt.-% of at least one block copolymer (b) which comprises:

at least one hard block H, comprising repeating units of vinyl aromatic monomers, in particular styrene, and
at least one elastomeric soft block $S_1$, comprising repeating units of olefinic monomers, preferably ethylene and at least one olefinic monomer having 3 to 10 carbon atoms,
and/or
at least one soft block $S_2$ comprising repeating units of olefinic monomers and vinylaromatic monomers, in particular ethylene, at least one olefinic monomer having 3 to 10 carbon atoms and styrene,
wherein the proportion of the repeating units of vinyl aromatic monomers - based on the entire block copolymer (b) - is from 25 to 85 wt.-%, preferably 30 to 85 wt.-%, for example 30 to 80 wt.-% or 35 to 75 wt.-%; and

(c) 0 to 2 wt.-% of one or more additive(s) and/or processing aid(s) (c);

wherein the total amount of components (a), (b), and (c) is 100 wt.-%.

In this document, wt.-% means percent by weight.

Unless otherwise noted, olefinic monomers according to the invention are mono-functional olefinic monomers having one terminal C-C double bond, i.e. a monomer of the general formula (Ia):

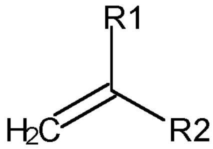

(Ia)

wherein

R1 is selected from hydrogen and saturated hydrocarbon groups comprising 1 to 10 carbon atoms, preferably hydrogen; and

R2 is selected from hydrogen and saturated hydrocarbon groups comprising 1 to 10 carbon atoms, preferably saturated hydrocarbon groups comprising 1 to 10 carbon atoms.

Diene monomers as disclosed herein (also referred to as dienes) are olefinic monomers having least two C-C double bonds, wherein at least one C-C double bond is a terminal C-C double bond and the second double bond is preferably an conjugated double bond, i.e. a monomer of the general formula (Ib):

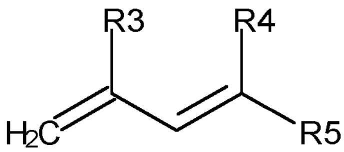

(Ib)

wherein

R3 is selected from hydrogen and saturated hydrocarbon groups comprising 1 to 10 carbon atoms, preferably selected from hydrogen and saturated hydrocarbon groups comprising 1 or 2 carbon atoms;

R4 is selected from hydrogen and saturated hydrocarbon groups comprising 1 to 10 carbon atoms, preferably selected from hydrogen and saturated hydrocarbon groups comprising 1 or 2 carbon atoms; and

R5 is selected from hydrogen and saturated hydrocarbon groups comprising 1 to 10 carbon atoms, preferably selected from hydrogen and saturated hydrocarbon groups comprising 1 to 3 carbon atoms.

According to the invention, the random copolymer (a) includes a copolymer having a statistical distribution of the repeating units of the vinylaromatic monomer and methyl methacrylate.

The molding composition (P) according to the invention comprises (or consists of) components (a), (b), and (c) in the following amounts:

30 to 82 wt.-%, 40 to 82 wt.-% or 50 to 82 wt.-%, of at least one random copolymer component (a);
18 to 70 wt.-%, 18 to 60 wt.-% or 18 to 50 wt.-%, of at least one block copolymer component (b); and
0 to 2 wt.-%, preferably 0.1 to 2 wt.-%, of at least one component (c),
wherein the total amount of components (a), (b), and (c) is 100 wt.-%.

In one embodiment the molding composition (P) according to the invention preferably comprises (or consists of) components (a), (b), and (c) in the following amounts:

50 to 82 wt.-%, preferably 55 to 82 wt.-%, for example 65 to 82 wt.-%, or 65 to 80 wt.-%, of at least one random copolymer component (a);

18 to 50 wt.-%, preferably 18 to 45 wt.-%, for example 18 to 35 wt.-%, or 20 to 35 wt.-%, of at least one block copolymer component (b); and

0 to 2 wt.-%, preferably 0.1 to 2 wt.-%, of at least one component (c),

wherein the total amount of components (a), (b), and (c) is 100 wt.-%.

In one embodiment, the molding composition (P) according to the invention preferably comprises (or consists of) components (a), (b), and (c) in the following amounts:

50 to 81.9 wt.-%, preferably 55 to 81.9 wt.-%, for example 65 to 81.9 wt.-%, or 65 to 77.9 wt.-% of at least one random copolymer component (a);
18 to 49.9 wt.-%, preferably 18 to 44.9 wt.-%, for example 18 to 34.9 wt.-%, for example 20 to 34.9 wt.-%, of at least one block copolymer component (b); and
0.1 to 2 wt.-%, of at least one component (c),
wherein the total amount of components (a), (b), and (c) is 100 wt.-%.

The at least one block copolymer (b) comprises (or consists of) at least one component (b-1), wherein component (b-1) is a block copolymer (b-1) which comprises:

at least one hard block H, comprising repeating units of vinyl aromatic monomers, in particular styrene, and
at least one elastomeric soft block $S_1$, comprising repeating units of olefinic monomers, preferably ethylene and at least one olefinic monomer having 3 to 10 carbon atoms,
and/or
at least one soft block $S_2$ comprising repeating units of olefinic monomers and vinylaromatic monomers, in particular ethylene, at least one olefinic monomer having 3 to 10 carbon atoms and styrene,
wherein the proportion of the repeating units of vinyl aromatic monomers - based on the entire block copolymer (b-1) - is from 55 to 85 wt.-%, preferably from 55 to 80 wt.-%, often from 60 to 75 wt.-%.

In one embodiment of the invention, the at least one block copolymer (b) comprises (or consists of) two or more components (b-1).

In one embodiment of the invention, the at least one block copolymer (b) comprises at least one component (b-2), wherein component (b-2) is a copolymer (b-2) which comprises:

at least one hard block H, comprising repeating units of vinyl aromatic monomers, in particular styrene, and
at least one elastomeric soft block $S_1$, comprising repeating units of olefinic monomers, preferably ethylene, and at least one olefinic monomer having 3 to 10 carbon atoms,
and/or
at least one soft block $S_2$ comprising repeating units of olefinic monomers and vinylaromatic monomers, in particular ethylene, at least one olefinic monomer having 3 to 10 carbon atoms and styrene,
wherein the proportion of the vinyl aromatic monomers - based on the entire block copolymer (b-2) - is from 25 to 54 wt.-%, preferably from 30 to 54 wt.-%, often from 35 to 50 wt.-%.

In one embodiment of the invention, the at least one block copolymer (b) comprises (or consists of) two or more components (b-2).

In one embodiment of the invention, the at least one block copolymer (b) comprises (or consists of) at least one component (b-1) and at least one component (b-2) in combination,

wherein component (b-1) is a block copolymer (b-1) which comprises:

at least one hard block H, comprising repeating units of vinyl aromatic monomers, in particular styrene, and
at least one elastomeric soft block $S_1$, comprising repeating units of olefinic monomers, preferably ethylene and at least one olefinic monomer having 3 to 10 carbon atoms,
and/or
at least one soft block $S_2$ comprising repeating units of olefinic monomers and vinylaromatic monomers, in particular ethylene, at least one olefinic monomer having 3 to 10 carbon atoms and styrene,
wherein the proportion of the repeating units of vinyl aromatic monomers - based on the entire block copolymer (b-1) - is from 55 to 85 wt.-%, preferably from 55 to 80 wt.-%, often from 60 to 75 wt.-%; and

wherein component (b-2) is a block copolymer (b-2) which comprises:

at least one hard block H, comprising repeating units of vinyl aromatic monomers, in particular styrene, and
at least one elastomeric soft block $S_1$, comprising repeating units of olefinic monomers, preferably ethylene, and at least one olefinic monomer having 3 to 10 carbon atoms,
and/or

at least one soft block $S_2$ comprising repeating units of olefinic monomers and vinylaromatic monomers, in particular ethylene, at least one olefinic monomer having 3 to 10 carbon atoms and styrene,
wherein the proportion of the vinyl aromatic monomers - based on the entire block copolymer (b-2) - is from 25 to 54 wt.-%, preferably from 30 to 54 wt.-%, often from 35 to 50 wt.-%.

Preferably, the molding composition (P) comprises at least one component (b-1) and optionally at least one component (b-2) in addition to the at least one component (b-1).

The molding composition (P) according to the invention comprises 18 to 70 wt.-%, 18 to 60 wt.-% or 18 to 50 wt.-%, of at least one block copolymer component (b), based on the total weight of the molding composition (P).

In one embodiment of the invention, the molding composition (P) according to the invention comprises 18 to 70 wt.-%, 18 to 60 wt.-% or 18 to 50 wt.-%, of at least one block copolymer component (b-1), based on the total weight of the molding composition (P). For example, the molding composition (P) according to the invention may comprise 18 to 45 wt.-%, for example 18 to 35 wt.-%, or 20 to 35 wt.-%, of at least one block copolymer component (b-1), based on the total weight of the molding composition (P).

In one embodiment of the invention, the molding composition (P) according to the invention comprises 18 to 60 wt.-% or 18 to 50 wt.-%, of at least one block copolymer component (b-2), based on the total weight of the molding composition (P). For example, the molding composition (P) according to the invention may comprise 18 to 45 wt.-%, for example 18 to 35 wt.-%, or 20 to 35 wt.-%, of at least one block copolymer component (b-2), based on the total weight of the molding composition (P).

In one embodiment of the invention, the molding composition (P) according to the invention comprises a total amount of 18 to 70 wt.-%, 18 to 60 wt.-% or 18 to 50 wt.-%, of at least one block copolymer component (b-1) and at least one block copolymer component (b-2) in combination, based on the total weight of the molding composition (P). For example, the molding composition (P) according to the invention may comprise 18 to 29 wt.-%, preferably 19 to 26.9 wt.-%, often 19.6 to 25.5 wt.-%, of at least one block copolymer component (b-1), and 3 to 14 wt.-%, preferably 4 to 11.9 wt.-%, often 4.6 to 6.5 wt.-%, of at least one block copolymer component (b-2), based on the total weight of the molding composition (P).

In one embodiment of the invention, the molding composition (P) comprises (or consists of) components (a), (b-1), (b-2), and (c) the following amounts:

68 to 79 wt.-%, preferably 69 to 76.9 wt.-%, often 69.6 to 75.5 wt.-%, of at least one random copolymer component (a)
18 to 29 wt.-%, preferably 19 to 26.9 wt.-%, often 19.6 to 25.5 wt.-%, of at least one block copolymer component (b-1),
3 to 14 wt.-%, preferably 4 to 11.9 wt.-%, often 4.6 to 6.5 wt.-%, of at least one block copolymer component (b-2), and
0 to 2 wt.-%, preferably 0.1 to 2 wt.-%, often 0.3 to 2 wt.-%, of at least one component (c) wherein the total amount of components (a), (b-1), (b-2) and (c) is 100 wt.-%, and wherein
(b-1) is a block copolymer (b-1) which comprises:

at least one hard block H, comprising repeating units of vinyl aromatic monomers, in particular styrene, and
at least one elastomeric soft block $S_1$, comprising repeating units of olefinic monomers, preferably ethylene and at least one olefinic monomer having 3 to 10 carbon atoms,
and/or
at least one soft block $S_2$ comprising repeating units of olefinic monomers and vinylaromatic monomers, in particular ethylene, at least one olefinic monomer having 3 to 10 carbon atoms and styrene,
wherein the proportion of the repeating units of vinyl aromatic monomers - based on the entire block copolymer (b-1) - is from 55 to 85 wt.-%, preferably from 55 to 80 wt.-%, often from 60 to 75 wt.-%; and

(b-2) is a block copolymer (b-2) which comprises:

at least one hard block H, comprising repeating units of vinyl aromatic monomers, in particular styrene, and
at least one elastomeric soft block $S_1$, comprising repeating units of olefinic monomers, preferably ethylene, and at least one olefinic monomer having 3 to 10 carbon atoms,
and/or
at least one soft block $S_2$ comprising repeating units of olefinic monomers and vinylaromatic monomers, in particular ethylene, at least one olefinic monomer having 3 to 10 carbon atoms and styrene,
wherein the proportion of the vinyl aromatic monomers - based on the entire block copolymer (b-2) - is from 25 to 54 wt.-%, preferably from 30 to 54 wt.-%, often from 35 to 50 wt.-%.

If component (c) is present, the minimum amount is usually 0.1 wt.-% for component (c).

Preferred are molding compositions (P) wherein the values of the refractive index (at 589.3 nm) of components (a) and (b) are within the range of from 1.52 to 1.57. This results in a molding composition (P) of particular high clarity, high

transmittance and low haze. In a preferred embodiment of the invention, the refractive index (at 589.3 nm) of the molding composition (P) is within the range of from 1.52 to 1.57, more preferably 1.53 to 1.56.

Unless otherwise mentioned, the refractive indices disclosed herein are at 589.3 nm and 23°C and determined analogously to ASTM C 1648-12 using the Metricon® system described therein.

If multiple components (a) and/or (b) (e.g. components (b-1) and (b-2)) are used, the refractive index (at 589.3 nm) of the mixture of all components (a) is preferably within the range of from 1.52 to 1.57 and the refractive index (at 589.3 nm) of the mixture of all components (b) is preferably within the range of from 1.52 to 1.57.

The at least one component (a) preferably has a refractive index (at 589.3 nm) within the range of from 1.52 to 1.57, more preferably in the range from 1.53 to 1.56, for example in the range from 1.54 to 1.56.

The at least one component (b-1) preferably has a refractive index (at 589.3 nm) within the range of from 1.52 to 1.57, more preferably in the range from 1.54 to 1.57, for example in the range from 1.54 to 1.56.

The at least one component (b-2) preferably has a refractive index (at 589.3 nm) within the range of from 1.52 to 1.57, more preferably in the range from 1.52 to 1.55, for example in the range from 1.52 to 1.54.

Preferred are molding compositions (P) wherein the values of the refractive index difference ΔRI (at 589.3 nm) of components (a) and (b) is ≤ 0.02, preferably ≤ 0.01, more preferably ≤ 0.008, often ≤ 0.007, for example ≤ 0.006 or ≤ 0.005. This results in a molding composition (P) of particular high transmittance, clarity and low haze. According to the invention, the refractive index difference ΔRI is calculated from the refractive indices of the individual components according to the following formula:

$$\Delta RI = |RI(a) - RI(b)|$$

with:

ΔRI = difference in refractive index RI,
RI(a) = refractive index of component(s) (a) at 589.3 nm,
RI(b) = refractive index of component(s) (b) at 589.3 nm,

For a composition comprising one component (a), having a refractive index RI(a), and one component (b), having a refractive index RI(b), the difference in refractive index ΔRI is therefore calculated as follows:

$$\Delta RI = |RI(a) - RI(b)|$$

For a composition comprising one component (a), having a refractive index RI(a), and two components (b) (i.e. one component ($b_1$), having a refractive index RI($b_1$), and one further one component ($b_2$), having a refractive index RI($b_2$)), the difference in refractive index ΔRI is calculated from the refractive indices of the individual components and the mass fractions of the components as follows:

$$\Delta \mathrm{RI} = \left|\mathrm{RI(a)} - \left[\frac{[\mathrm{w(b_1)} * \mathrm{RI(b_1)}] + [\mathrm{w(b_2)} * \mathrm{RI(b_2)}]}{[\mathrm{w(b_1)} + \mathrm{w(b_2)}]}\right]\right|$$

wherein:

w($b_1$) = mass fraction of component ($b_1$),
w($b_2$) = mass fraction of component ($b_2$)

For a composition comprising one component (a), having a refractive index RI(a), and multiple components (b) (i.e. components ($b_1$) to ($b_m$), having a refractive indices RI($b_1$) to RI($b_m$)), the difference in refractive index ΔRI is calculated from the refractive indices of the individual components and the mass fractions of the components as follows:

$$\Delta \mathrm{RI} = \left|\mathrm{RI(a)} - \left[\frac{[w\mathrm{(b_1)} * \mathrm{RI(b_1)}] + \cdots + [\mathrm{w(b_m)} * \mathrm{RI(b_m)}]}{[\mathrm{w(b_1)} + \cdots + \mathrm{w(b_m)}]}\right]\right|$$

If more than one random copolymer is used as component (a) is used (i.e. components ($a_1$) to ($a_n$), having a refractive indices RI($a_1$) to RI($a_n$)), the refractive index RI(a) of component (a) is calculated from the refractive indices of the individual components and the mass fractions of the components as follows:

$$RI(a) = \left[\frac{[w(a_1) * RI(a_1)] + \cdots + [w(a_n) * RI(a_n)]}{[w(a_1) + \cdots + w(a_n)]}\right]$$

wherein:

$w(a_1)$ = mass fraction of component ($a_1$),
$w(a_n)$ = mass fraction of component ($a_n$).

As indicated herein below, the random copolymer component (a) may comprise the at least one random copolymer made from 30 to 70 wt.-% vinylaromatic monomer (a11) and from 30 to 70 wt.-% of methyl methacrylate (a12) in combination with further random copolymers (in particular random copolymers comprising vinylaromatic repeating units such as further random copolymers of vinylaromatic monomers and methyl methacrylate or random copolymer of vinylaromatic monomers and acrylonitrile). However, typically, only one random copolymer is used as component (a). Molding compositions (P) comprising only one random copolymer as component (a) typically exhibit lower haze.

The molding compositions (P) according to the invention have a transmittance of more than 40%. Preferably, the molding compositions (P) according to the invention have a transmittance more than 60%, more preferably more than 70%, often more than or equal to 80%, for example more than or equal to 90%. Transmittance is determined in accordance with ASTM D1003 for 3.2 mm (0.125 inch) thickness specimen.

The molding compositions (P) according to the invention have a clarity of more than 90%, more preferably more than 95%, often more than or equal to 98%, for example more than or equal to 99%. Clarity is determined in accordance with ASTM D1003 for 3.2 mm (0.125 inch) thickness specimen.

Preferably, the molding compositions (P) according to the invention have a haze of less than 50%, more preferably less than 40%, often less than 20%. Haze is determined in accordance with ASTM D1003 for 3.2 mm (0.125 inch) thickness specimen.

Exceptionally high degrees of transmittance and clarity as well as low degrees of haze are typically achieved by molding compositions (P) wherein the values of the refractive index difference ΔRI (at 589.3 nm) of components (a) and (b) is ≤ 0.02, preferably ≤ 0.01, more preferably ≤ 0.008, often ≤ 0.007, for example ≤ 0.006 or ≤ 0.005.

In some embodiments, the molding composition (P) according to the invention is characterized by having an haze determined according to ASTM D1003 for injection molded plaques having a thickness of 3.2 mm (0.125 in) of less than 20%, more preferably less than or equal to 15% or 10%. This is typically achieved by molding compositions (P) as defined herein above, wherein the difference in refractive index ΔRI between the refractive index of the random copolymer(s) (a) and the block copolymer(s) (b) is smaller than or equal to about 0.003, for example smaller than or equal to about 0.0026.

The molding composition (P) according to the invention has good light stability. In particular, the molding composition (P) according to the invention is characterized by having preferably less than 2 units of yellowness index increase (ΔYI) after UV stability testing (600 hours), more preferably less than 1.5, often less than 1, units of yellowness index increase (ΔYI), wherein the UV stability testing is conducted according to AATCC TM16.3, and wherein yellowness index is calculated according to ASTM E313 from measured CIELAB color space values, which are measured using a D65 light source (observation angle 10°) according to ASTM E1348.

Moreover, the molding composition (P) according to the invention is characterized by having preferably less than 2 units of color change (ΔE) after UV stability testing (600 hours), more preferably less than 1.5, often less than 1, units of color change (ΔE), wherein the UV stability testing is conducted according to AATCC TM16.3, and wherein color change (ΔE) is calculated according to ASTM D2244 from measured CIELAB color space values, which are measured using a D65 light source (observation angle 10°) according to ASTM E1348.

The molding composition (P) according to the invention also exhibits improved mechanical properties as determined by its tensile energy to break. Preferably the tensile energy to break determined according to ASTM D638-14 is more than 17 Nm, more preferably more than 18 Nm.

The molding compositions (P) according to the invention often have a melt flow rate (MFR, determined according to ASTM D1238 at 200°C and 5 kg) of ≥ 2 g/10 min. In some cases, the melt flow rate (MFR, determined according to ASTM D1238 at 200°C and 5 kg) of the molding composition (P) is increased by a factor of at least 1.5 compared to the random copolymer component (a) in the absence of the block copolymer component(s) (b).

In one preferred embodiment, the molding composition (P) according to the invention consists of the components (a) and (b), and optionally (c). In a further embodiment, the molding composition (P) according to the invention consists of the components (a), (b-1), and (b-2), and optionally (c).

According to the invention, the molding composition (P) comprises (or preferably consists of) the at least one random copolymer (a), the at least one block copolymer (b), and the additive and/or processing aid (c) as defined herein. Thus, apart from the at least one copolymer (a) and the at least one block copolymer (b), the molding composition (P) preferably comprises substantially no further polymer constituents, in particular no polymer constituents having a

refractive index (at 589.3 nm) outside the range of from 1.52 to 1.57, since these polymer constituents significantly deteriorate the optical properties of the molding composition (P). This means that the molding composition (P) preferably comprises less than 1 wt.-%, more preferably less than 0.5 wt.-%, based on the total weight of the molding composition (P), of polymer constituents having a refractive index (at 589.3 nm) outside the range of from 1.52 to 1.57. Examples of undesired polymeric constituents include, but are not limited to, for example polyolefins (e.g. no polyethene, polypropene or ethene-propene copolymers), polyamides, polycarbonates or poly(meth)acrylates.

However, the molding composition (P) may optionally comprise polymer constituents different from the at least one random copolymer (a) made from vinylaromatic monomers and of methyl methacrylate, and the at least one block copolymer (b), provided that these polymer constituents have a refractive index (at 589.3 nm) in the range of from 1.52 to 1.57. For example, the molding composition (P) may comprise a random copolymer of styrene and acrylonitrile (SAN), preferably in an amount of less than 40 wt.-%, more preferably less than 30 wt.-%, based on the total weight of the molding composition (P).

Moreover, as indicated herein below, the polymer composition (P) may comprise polyolefin waxes having a weight average molecular weight of ≤ 20,000 g/mol as additive component (c) as demolding agents, typically in an amount of < 1 wt.-%, based on the total weight of the polymer composition (P). According to the invention, weight average molecular weight is determined by gel permeation chromatography (GPC) is determined according to ASTM D3593 unless otherwise noted. Optionally, the polymer composition (P) may comprise polymer constituents having a refractive index (at 589.3 nm) in the range of from 1.52 to 1.57.

Component (a)

According to the invention, the molding composition (P) comprises a random copolymer component (a). The random copolymer component (a) comprises (or consists of) at least one (preferably one) random copolymer made from 30 to 70 wt.-% vinylaromatic monomer (a11), in particular styrene, and from 30 to 70 wt.-% of methyl methacrylate (a12); more preferred are random copolymers made from 40 to 65 wt.-%, more preferably 45 to 63 wt.-%, further more preferably 48 to 60 wt.-%, and often 50 to 58 wt.-%, of vinylaromatic monomer (a11) and from 35 to 60 wt.-%, more preferably 37 to 55 wt.-%, further more preferably 40 to 52 wt.-%, and often 42 to 50 wt.-%, of methyl methacrylate (a12). In said compositions the total amount of (a11) and (a12) is 100 wt.-% and the vinylaromatic monomer (a11) and the methyl methacrylate (a12) are statistically distributed in the random copolymer.

Styrene-methyl methacrylate (SMMA) copolymers (a) may be obtained in a known manner by bulk, solution, suspension, precipitation or emulsion polymerization. Details of these processes are described, for example, in Kunststoffhandbuch, ed. R. Vieweg and G. Daumiller, Vol. V "Polystyrol", Carl-Hanser-Verlag Munich, 1969, p. 118 ff. SMMA copolymers (a) are known products which are commercially available e.g. from Ineos Styrolution (Frankfurt, Germany).

Additionally, the random copolymer component (a) may comprise one or more random copolymer(s) different from the vinylaromatic-methyl methacrylate copolymers described herein (e.g. SMMA), for example a random copolymer of styrene and acrylonitrile (SAN), preferably in an amount of less than 50 wt.-%, often less than 40 wt.-%, based on the total weight of the random copolymer component (a). However, in order to obtain a molding composition (P) with a low haze, it is often advantageous to use only one random copolymer as random copolymer component (a).

Component (b)

The at least one block copolymer component (b) comprises at least one block copolymer (b) which may be a linear or star-shaped block copolymer and comprises:

at least one hard block H comprising repeating units of vinylaromatic monomers, in particular styrene, and
at least one soft block $S_1$ comprising repeating units of olefinic monomers, in particular ethylene and at least one olefinic monomer having 3 to 10 carbon atoms, and/or
at least one soft block $S_2$ comprising repeating units of olefinic monomers and vinylaromatic monomers, in particular ethylene and at least one olefinic monomer having 3 to 10 carbon atoms as repeating units of olefinic monomers and styrene as repeating units of vinylaromatic monomers.

In one embodiment of the invention, the at least one block copolymer (b) may be a linear block copolymer and comprises:

one hard block H comprising repeating units of vinylaromatic monomers, in particular styrene, and
one soft block $S_1$ comprising repeating units of olefinic monomers, in particular ethylene and at least one olefinic monomer having 3 to 10 carbon atoms, and/or
one soft block $S_2$ comprising repeating units of olefinic monomers and vinylaromatic monomers, in particular ethylene

and at least one olefinic monomer having 3 to 10 carbon atoms as repeating units of olefinic monomers and styrene as repeating units of vinylaromatic monomers.

In an alternative embodiment, the at least one block copolymer (b) may be a linear or star-shaped block copolymer and comprises:

at least two hard blocks H comprising repeating units of vinylaromatic monomers, in particular styrene, and
at least one soft block $S_1$ comprising repeating units of olefinic monomers, in particular ethylene and at least one olefinic monomer having 3 to 10 carbon atoms, and/or
at least one soft block $S_2$ comprising repeating units of olefinic monomers and vinylaromatic monomers, in particular ethylene and at least one olefinic monomer having 3 to 10 carbon atoms as repeating units of olefinic monomers and styrene as repeating units of vinylaromatic monomers. In a preferred embodiment thereof, the at least two hard blocks H comprising repeating units of vinylaromatic monomers constitute preferably terminal blocks of the block copolymer (b).

Suitable vinyl aromatic monomers which may constitute repeating units of the hard (polymer) blocks H or else of the soft (copolymer) block $S_2$ of component (b) are styrene, $\alpha$-methylstyrene, p-methylstyrene, ethylstyrene, tert-butylstyrene, vinyl toluene or mixtures of these, preferably styrene. The hard (polymer) blocks H of the block copolymer (b) are hard phases with a preferred glass transition temperature ($T_g$) > 70°C.

$T_g$ is measured by methods known to the polymer chemist, in particular differential scanning calorimetry (DSC).

The hard blocks H of component (b) may comprise from 95 to 100 wt.-% of repeating units of at least one vinylaromatic monomer and from 0 to 5 wt.-% of repeating units of at least one olefinic monomer, preferably the hard blocks H are homopolymers comprising repeating units from vinylaromatic monomers, in particular styrene.

Suitable olefinic monomers which may constitute repeating units of the soft (polymer) blocks $S_1$ or the soft (copolymer) block $S_2$ of component (b) are mono-functional olefinic monomers of formula (Ia) and may preferably be selected from ethylene, and at least one olefinic monomer having 3 to 10 carbon atoms, such as propene, butylene, 2-methylpropene, 1-pentene, 1-hexene, vinylcyclohexane or mixtures of these, preferably ethylene and propene or ethylene and butylene, in particular ethylene and butylene. The soft (polymer) blocks $S_1$ of the block copolymer (b) are soft phases with a preferred glass transition temperature (Tg) < 0°C, preferably in the range from -60°C to -10°C.

Additionally, the soft (polymer) blocks $S_1$ or the soft (copolymer) block $S_2$ of component (b) may comprise repeating units of diene monomers such as 1,3-butadiene, isoprene, 2,3-dimethylbutadiene, 1,3-pentadiene, or 1,3-hexadienes or mixtures of these, preferably 1,3-butadiene and isoprene, in particular 1,3-butadiene. These repeating units of diene monomers may remain as residues of an incomplete hydrogenation of the vinylaromatic-diene block copolymer (b') described herein below during the preparation of the vinylaromatic-olefinic block copolymer (b). The amount of repeating units of diene monomers is preferably ≤ 10 wt.-%, more preferably ≤ 5 wt.-%, based on the at least one soft block $S_1$ and/or at least one soft block $S_2$, respectively.

The soft block $S_1$ of component (b) may comprise from 95 to 100 wt.-% of repeating units of at least one olefinic monomer (and optionally repeating units of the respective diene monomers) and from 0 to 5 wt.-% of repeating units of at least one vinylaromatic monomer, preferably the soft block $S_1$ is a copolymer of repeating units of at least one olefinic monomer (and optionally repeating units of the respective diene monomers), preferably ethylene and at least one further olefinic monomer having 3 to 10 carbon atoms.

Preferably, the at least one elastomeric soft blocks $S_1$ comprise repeating units of ethylene and at least one olefinic monomer such as propene, butylene, 2-methylpropene, 1-pentene, 1-hexene, vinylcyclohexane or mixtures of these, preferably selected from propylene and butylene, more preferably selected from ethylene and propene or ethylene and butylene, in particular ethylene and butylene. Likewise, the at least one soft block $S_2$ preferably comprises repeating units of ethylene, at least one olefinic monomer selected from propylene and butylene, and styrene, more preferably ethylene, butylene and styrene.

Generally - based on the entire block copolymer (b) - the proportion of the repeating units of vinylaromatic monomers is from 25 to 85 wt.-%, preferably 30 to 85 wt.-%, for example 30 to 80 wt.-%, and the proportion of the repeating units of olefinic monomers is from 15 to 75 wt.-%, preferably 15 to 70 wt.-%, for example 20 to 70 wt.-%.

In one embodiment, component (b) comprises (or consists of) at least two block copolymers (b-1) and (b-2), wherein

(b-1) is at least one block copolymer (b-1) which comprises:

at least one hard block H, comprising repeating units of vinyl aromatic monomers, in particular styrene, and
at least one elastomeric soft block $S_1$, comprising repeating units of olefinic monomers, in particular ethylene and butylene, and/or

at least one soft block $S_2$ comprising repeating units of olefinic monomers and vinylaromatic monomers, in particular ethylene, butylene and styrene,

wherein the proportion of the vinyl aromatic monomers - based on the entire block copolymer (b-1) - is from 55 to 85 wt.-%, preferably from 55 to 80 wt.-%, often from 60 to 75 wt.-%; and

(b-2) is at least one block copolymer (b-2) which comprises:

at least one hard block H, comprising repeating units of vinyl aromatic monomers, in particular styrene, and

at least one elastomeric soft block $S_1$, comprising repeating units of olefinic monomers, in particular ethylene and butylene, and/or

at least one soft block $S_2$ comprising repeating units of olefinic monomers and vinylaromatic monomers, in particular ethylene, butylene and styrene,

wherein the proportion of the vinyl aromatic monomers - based on the entire block copolymer (b-2) - is from 25 to 54 wt.-%, preferably from 30 to 54 wt.-%, often from 35 to 50 wt.-%.

In one embodiment, component (b) comprises (or consists of) at least two block copolymers (b-1) and (b-2), wherein

(b-1) is at least one block copolymer (b-1) which comprises:

at least one hard block H, comprising repeating units of vinyl aromatic monomers, in particular styrene, and

at least one elastomeric soft block $S_1$, comprising repeating units of olefinic monomers, in particular ethylene and butylene,

wherein the proportion of the vinyl aromatic monomers - based on the entire block copolymer (b-1) - is from 55 to 85 wt.-%, preferably from 55 to 80 wt.-%, often from 60 to 75 wt.-%; and

(b-2) is at least one block copolymer (b-2) which comprises:

at least one hard block H, comprising repeating units of vinyl aromatic monomers, in particular styrene, and

at least one elastomeric soft block $S_1$, comprising repeating units of olefinic monomers, in particular ethylene and butylene,

wherein the proportion of the vinyl aromatic monomers - based on the entire block copolymer (b-2) - is from 25 to 54 wt.-%, preferably from 30 to 54 wt.-%, often from 35 to 50 wt.-%.

It was found by the present inventors that a combination of two block copolymers (b-1) and (b-2) results in an unexpected combination of mechanical and optical properties, such as good impact strength, in combination with high transmittance and low haze.

In one embodiment of the invention, the component (b) comprises (or consists of):

(b-1) 45 to 95 wt.-%, preferably 55 to 90 wt.-%, more preferably 65 to 88 wt.-%, based on the total weight of component (b), of the at least one block copolymer (b-1); and

(b-2) 5 to 55 wt.-%, preferably 10 to 45 wt.-%, more preferably 12 to 35 wt.-%, based on the total weight of component (b), of the at least one block copolymer (b-2).

In some embodiments, the soft block is a block $S_2$, in particular a random block $S_2$. A "random" block $S_2$ means a copolymer block having a statistical distribution of the repeating units of the vinylaromatic monomers and olefinic monomers.

The (copolymer) block $S_2$, in particular the random copolymer block $S_2$, may comprise from 5 to 39 wt.-%, in particular 6 to 39 wt.-%, of repeating units of vinylaromatic monomers, in particular styrene, and from 61 to less than 95 wt.-%, in particular 61 to 94 wt.-%, of repeating units of olefinic monomers, preferably ethylene and at least one further olefinic monomer having 3 to 10 carbon atoms, wherein the total amount of the repeating units of vinyl aromatic monomers and olefinic monomers is 100 wt.-%.

There may also be more than one, preferably random, (copolymer) block $S_2$. Often block copolymer (b) comprises at least 2, in particular random, soft (copolymer) blocks $S_{2-1}$ and $S_{2-2}$ having different proportions of repeating units of vinylaromatic monomers and therefore different glass transition temperatures.

Preferably, block copolymer (b) is a linear block copolymer with one or more hard blocks H, preferably terminal hard blocks H, and at least one soft block $S_1$ and/or at least one soft block $S_2$.

According to one embodiment, block copolymer (b) is a (preferably linear) block copolymer of the structure H-$S_1$,

in particular a styrene-ethylene/butylene block copolymer of the structure H-$S_1$.

According to an alternative embodiment, block copolymer (b) is a (preferably linear) block copolymer of the structure H-$S_2$, in particular a styrene-ethylene/butylene block copolymer of the structure H-$S_2$.

According to a further embodiment, block copolymer (b) is a (preferably linear) block copolymer of the structure H-$S_1$-H, in particular a styrene-ethylene/butylene block copolymer of the structure H-$S_1$-H.

According to a further alternative embodiment block copolymer (b) is a (preferably linear) block copolymer of the structure H-$S_2$-H, in particular a styrene-ethylene/butylene block copolymer of the structure H-$S_2$-H.

Component (b) is preferably obtained by the hydrogenation of non-conjugated double bonds of vinylaromatic-diene block copolymers (b'), which comprise at least one hard block H' made from vinylaromatic monomers, and at least one soft block $S_1$' made from dienes and/or at least one soft block $S_2$' made from dienes and vinylaromatic monomers. Typically, the component (b) is prepared by hydrogenating a vinylaromatic-diene block copolymer (b'), wherein preferably at least 90 % of the non-conjugated double bonds are hydrogenated, more preferably at least 95 %.

The vinylaromatic-diene block copolymer (b') may be a linear or star-shaped block copolymer and comprises:

at least one hard block H' made from vinylaromatic monomers, in particular styrene, and
at least one soft block $S_1$' made from dienes and/or
at least one soft block $S_2$' made from dienes and vinylaromatic monomers.

In one embodiment of the invention, the at least one vinylaromatic-diene block copolymer (b') may be a linear block copolymer comprising:

one hard block H' made from vinylaromatic monomers, in particular styrene, and
one soft block $S_1$' made from dienes and/or at
least one soft block $S_2$' made from dienes and vinylaromatic monomers.

In an alternative embodiment, the at least one vinylaromatic-diene block copolymer (b') may be a linear or star-shaped block copolymer comprising:

at least two hard blocks H' made from vinylaromatic monomers, in particular styrene, and
at least one soft block $S_1$' made from dienes, and/or
at least one soft block $S_2$' made from dienes and vinylaromatic monomers. In a preferred embodiment thereof, the at least two hard blocks H' made from vinylaromatic monomers constitute preferably terminal blocks of the vinylaromatic-diene block copolymer (b').

Vinyl aromatic monomers which may be used for the hard (polymer) blocks H' or else for the soft (copolymer) block $S_2$' of the vinylaromatic-diene block copolymer (b') are styrene, $\alpha$-methylstyrene, p-methylstyrene, ethylstyrene, tert-butylstyrene, vinyl toluene or mixtures of these, preferably styrene. The hard (polymer) blocks H' of the block copolymer (b) are hard phases with a glass transition temperature (Tg) > 70°C.

The skilled person is aware that, in order to prepare vinylaromatic-olefinic block copolymers (b) having a proportion of the repeating units of vinyl aromatic monomers - based on the entire block copolymer (b) - from 25 to 85 wt.-%, preferably 30 to 85 wt.-%, for example 30 to 80 wt.-%, from vinylaromatic-diene block copolymers (b'), it is required for the vinylaromatic-diene block copolymer (b') to have a proportion of the repeating units of vinyl aromatic monomers in the same range, i.e. in the range from 25 to 85 wt.-%, preferably 30 to 85 wt.-%, for example 30 to 80 wt.-%. Likewise, the proportion of the vinyl aromatic monomers in vinylaromatic-diene block copolymer (b-1') used for the preparation of vinylaromatic-olefinic block copolymers (b-1) is from 55 to 85 wt.-%, preferably from 55 to 80 wt.-%, often from 60 to 75 wt.-%, based on the entire block copolymer (b-1'). Also, the proportion of the vinyl aromatic monomers in vinylaromatic-diene block copolymers (b-2') used for the preparation of vinylaromatic-olefinic copolymers (b-2) is from 25 to 54 wt.-%, preferably from 30 to 54 wt.-%, often from 35 to 50 wt.-%, based on the entire block copolymer (b-2').

The hard blocks H' of the vinylaromatic-diene block copolymer (b') can be made from 95 to 100 wt.-% of at least one vinylaromatic monomer and 0 to 5 wt.-% of at least one diene, preferably the hard blocks H' are homopolymers made from vinylaromatic monomers, in particular styrene.

Suitable dienes which may be used for the preparation of the vinylaromatic-diene block copolymer (b') are conjugated dienes, preferably conjugated dienes of formula (Ib) described herein above. Preferred dienes for the at least one soft block $S_1$' or the at least one soft block $S_2$' (or optionally for the hard blocks H') are 1,3-butadiene, isoprene, 2,3-dimethylbutadiene, 1,3-pentadiene, or 1,3-hexadienes or mixtures of these, more preferably 1,3-butadiene and isoprene, in particular 1,3-butadiene.

The soft block $S_1$' of the vinylaromatic-diene block copolymer (b') may be made from 95 to 100 wt.-% of at least one diene and 0 to 5 wt.-% of at least one vinylaromatic monomer, preferably the soft block B is a homopolymer made from

a conjugated diene, in particular 1,3-butadiene.

In some embodiments, the soft block is a block $S_2$' of the vinylaromatic-diene block copolymer (b'), in particular a random block $S_2$'. A "random" block $S_2$' means a copolymer block having a statistical distribution of the polymerized units of the vinylaromatic monomers and diene monomers.

Often the (copolymer) block $S_2$' of the vinylaromatic-diene block copolymer (b'), in particular the random copolymer block $S_2$', is made from 5 to 39 wt.-%, in particular 6 to 39 wt.-%, vinylaromatic monomer, in particular styrene, and from 61 to less than 95 wt.-%, in particular 61 to 94 wt.-%, diene monomers, in particular 1,3-butadiene, wherein the total amount of the vinyl aromatic monomer and the diene monomers is 100 wt.-%.

There may also be more than one, preferably random, (copolymer) block $S_2$. Often block copolymer (b) comprises at least 2, in particular random, soft (copolymer) blocks $S_{2-1}$' and $S_{2-2}$' having different proportions of vinylaromatic monomers and therefore different glass transition temperatures. For all copolymer blocks $S_2$' such as $S_{2-1}$', $S_{2-2}$' etc., Tg is < 0°C, generally in the range between -80° to 0°C, preferably in the range from -70°C to -20°C, particularly preferably from -70 to -40°C.

The block copolymers (b') are preferably prepared by sequential anionic polymerization. The block copolymers (b) are prepared preferably by hydrogenation of the non-conjugated double bonds of the block copolymers (b'), i.e. double bonds predominantly present in the soft block $S_1$' or the soft block $S_2$' of the block copolymers (b'). Hydrogenation may for example be effected by the reaction of block copolymers (b') with hydrogen in the presence of suitable catalysts. The block copolymers (b) as well as the block copolymers (b') are known. The preparation of block copolymer (b') is described for example in "Modern Styrenic Polymers: Polystyrenes and Styrenic Copolymers" (Eds., J. Scheirs, D. Priddy, Wiley, Chichester, UK, (2003), pages 502 to 507) and in particular in US 6,521,712 (col. 2, l. 52 to col. 4, line 2). The preparation of block copolymer (b) by hydrogenation of block copolymers is described for example in US 2015/0031835 A1.

Examples of block copolymers (b) are known products and commercially available as TUFTEC™ H1043 and TUFTEC™ H1517 from Asahi Kasei, Japan.

Component (c)

Optionally the thermoplastic molding composition (P) may comprise up to 2.0 wt.-%, preferably 0.10 to 2 wt.-%, of at least one further additive and/or processing aid (c) (as component (c)).

Suitable additives and/or processing aids (c) include all substances customarily employed for processing or finishing the polymers, except of fillers/fibers and pigments (see e.g. "Plastics Additives Handbook", Hans Zweifel, 6th edition, Hanser Publ., Munich, 2009).

Preferred additives and/or processing aids (c) are such as stabilizers (e.g. UV-stabilizers), oxidation retarders, anti-oxidants, agents to counter thermal decomposition and decomposition due to light, lubricants and dyes.

These additives and/or processing aids (c) may be admixed at any stage of the manufacturing operation, but preferably at an early stage in order to profit early on from the stabilizing effects (or other specific effects) of the added substance.

Suitable antioxidants are, e.g., one or more compounds selected from mono-phosphite-based antioxidants, di-phosphite-based antioxidants and sterically hindered phenolic antioxidants. If one or more antioxidants are present, they are preferably selected from mono-phosphite-based antioxidants, such as tri-substituted mono-phosphite derivatives, di-phosphite-based antioxidants, such as substituted pentaerythritol di-phosphite derivatives and sterically hindered phenolic antioxidants, such as 2,6-di-tertbutylphenolic derivatives.

Suitable lubricants/glidants and demolding agents include stearic acids, stearyl alcohol, stearic esters, amide waxes (bis-stearylamide, in particular ethylene bis-stearamide), polyolefin waxes having a weight average molecular weight of ≤ 20,000 g/mol and/or generally higher fatty acids, derivatives thereof and corresponding fatty acid mixtures comprising 12 to 30 carbon atoms.

Suitable dyes are any of the dyes which can be used for the transparent, semitransparent, or non-transparent coloring of polymers, in particular those dyes which are suitable for coloring styrene copolymers. Dyes of this type are known to the skilled worker. Preferred are dyes which can be used for the transparent coloring of polymers.

Examples of oxidation retarders and heat stabilizers are halides of the metals from group I of the periodic table, examples being sodium, potassium and/or lithium halides, optionally in combination with copper (I) halides, e.g., chlorides, bromides, iodides, sterically hindered phenols, hydroquinones, different substituted representatives of these groups, and mixtures thereof, in concentrations of up to 1 wt.-%, based on the weight of the molding composition (P).

Examples of suitable stabilizers to counter the effect of light (e.g UV-stabilizers) are various substituted resorcinols, salicylates, benzotriazoles, triazines benzophenones, and HALS (hindered amine light stabilizers), for example those commercially available as Tinuvin®, which are generally used in amounts of up to 1.7 wt.-%, based on the molding composition (P).

Process for the preparation

A further aspect of the invention is a process for the preparation of a molding composition (P) according to the invention by melt-mixing of components (a), (b) and, if appropriate, component (c). Preferably the melt-mixing of the components (a), (b) and, if appropriate, (c) is performed in an extruder, preferably a twin screw extruder.
The melt-mixing may be performed, preferably in an extruder, at temperatures in the range of from 160 to 260°C. Preferably melt-mixing is performed in an extruder at temperatures in the range of from 180 to 230°C.
The molding composition (P) obtained by said process shows a good processability and thus can be easily processed, i.e. molded to any desired shape e.g. by extrusion and hot molding (e.g. injection molding). Accordingly a further aspect of the invention is a shaped article produced from the molding composition (P) according to the invention.
The molding composition (P) according to the invention and shaped articles produced therefrom show a good balance of stiffness and toughness, with a high light stability while maintaining a high transmittance and clarity. They can advantageously be used for many applications.
The molding compositions (P) according to the invention can advantageously be used for many applications, e.g. housewares, home appliances, such as lighting and light covers blends as well as cap layers and protective covers.
A further subject of the invention is the use of molding compositions (P) according to the invention and shaped articles produced therefrom for various applications for housewares, home appliances, such as lighting and light covers blends as well as cap layers and protective covers, cap layers for sanitary applications, point of purchase displays, container holders, display holders.
The examples, figures and the patent claims further illustrate the invention.

Examples:

Test methods:

Melt flow rate (MFR) was determined according to ASTM D1238 at 200°C and 5 kg.
Un-notched Izod impact strength was determined in accordance with ASTM D4812.
Tensile stress at yield, tensile strain at break and tensile energy to break were determined in the test according to norm ASTM D638-14.
Rockwell hardness was determined according to ASTM D785.
Optical properties (haze, transmittance, and clarity) were determined in accordance with ASTM D1003 for 3.2 mm (0.125 inch) thickness specimen.
UV stability testing was conducted according to AATCC TM16.3 with xenon irradiance (420 nm) of 1.10 W/$m^2$ over black panel at 63°C.
Refractive index at 589.3 nm and 23°C was determined analogously to ASTM C 1648-12 using a Metricon Model 2010/M Prism Coupler (particular reference is made to section 9.4 of ASTM C 1648-12). The difference in refractive index ΔRI between the refractive index of the random copolymer(s) (a) and the block copolymer(s) (b) used in the examples (cf. composition and starting materials of the examples below) is calculated according to the following formula:

$$\Delta RI = \left| RI_{SMMA} - \frac{(w_{SEBS-1} * RI_{SEBS-1}) + (w_{SEBS-2} * RI_{SEBS-2})}{(w_{SEBS-1} + w_{SEBS-2})} \right|$$

with:

$RI_{SMMA}$ = refractive index of SMMA at 589.3 nm,
$RI_{SEBS\text{-}1}$ = refractive index of SEBS-1 at 589.3 nm,
$RI_{SEBS\text{-}2}$ = refractive index of SEBS-2 at 589.3 nm,
$w_{SEBS\text{-}1}$ = mass fraction of SEBS-1 in the composition,
$w_{SEBS\text{-}2}$ = mass fraction of SEBS-2 in the composition.

Yellowness Index (YI) was calculated according to ASTM E313 from measured CIELAB color space values. CIE color space values measured using a D65 light source (observation angle 10°) according to ASTM E1348.
Color Change (ΔE) was calculated according to ASTM D2244 from measured CIELAB color space values. CIE color space values measured using a D65 light source (observation angle 10°) according to ASTM E1348.

Starting materials:

| | |
|---|---|
| SMMA (a) | random styrene/methyl methacrylate-copolymer, MMA content: 45 wt.-%; refractive index at 589.3 nm of 1.5489. |
| SEBS-1 (b) | styrene block (ethylene/butylene) block styrene copolymer having a S/EB ratio of 67/33, commercially available as TUFTEC™ H1043 from Asahi Kasei, Japan; refractive index at 589.3 nm of 1.5506. |
| SEBS-2 (b) | styrene block (ethylene/butylene) block styrene copolymer having a S/EB ratio of 43/57, commercially available as TUFTEC™ H1517 from Asahi Kasei, Japan; refractive index at 589.3 nm of 1.5282. |

Reference Example 1 (Ref. 1) is a commercial available methyl methacrylate butadiene styrene (MBS) polymer composition, available as Zylar® 631 from INEOS Styrolution. Reference Example 2 (Ref. 2) is a blend of 81 wt.-% SMMA and 19 wt.-% of a styrene-block-butadiene-block styrene copolymer (SBS).

The materials as shown in Tables 1 to 5 were melt-mixed using a 30 mm twin screw extruder with zone temperatures set from 180 to 230°C. From the obtained molding compositions (P) specimens were injection molded and the parts tested for their mechanical and optical properties. Tables 1 to 5 show mechanical and optical properties of the injection molded specimens for examples 2 to 24 as well as comparative example C1. Tables 1 to 6 further evidence the benefit of samples according to the invention (Examples 2 to 24) as compared to current commercial styrenic impact modified clear molding compositions (P) such as Zylar® 631 (impact modified styrene acrylic copolymer (methyl methacrylate butadiene styrene (MBS) resin), and a blend of a random styrene/methyl methacrylate-copolymer and a styrene-block-butadiene-block styrene copolymer (SBS) (Ref. 1 and 2; Table 6) and not impact modified SMMA (Comparative Example C1).

Figure 1 shows the tensile energy to break (in [in-lbf], left axis) and haze (in [%], right axis) according to Tables 1 to 5 for Examples 2 to 24 and Comparative Example C1.

Figure 2 depicts the change in Yellowness Index (ΔYI) via UV exposure time (hours) according to AATCC TM 16.3 for Comparative Example C1, Example 15 and Reference Examples Ref. 1 and Ref. 2 according to Table 6.

Figure 3 depicts the change in color (ΔE) via UV exposure time (hours) according to AATCC TM 16.3 for Comparative Example C1, Example 15 and Reference Examples Ref. 1 and Ref. 2 according to Table 6.

Figure 4 visualizes the correlation between difference in refractive index (ΔRI) (at 589.3 nm and 23°C determined analogously to ASTM C 1648-12 and calculated as described above) and transmittance (determined according to ASTM D1003 for specimen of 3.2 mm thickness).

Table 1. Composition and properties of SMMA/SEBS-1 blends of Examples 2 to 5 and Comparative Example C1.

| | Units | Comparative Example | Examples | | | |
|---|---|---|---|---|---|---|
| | | C1 | 2 | 3 | 4 | 5 |
| SMMA | % | 100 | 80 | 70 | 60 | 50 |
| SEBS-1 | % | 0 | 20 | 30 | 40 | 50 |
| SEBS-2 | % | 0 | 0 | 0 | 0 | 0 |
| Mechanical Properties | | | | | | |
| MFR (200°C, 5 kg) | g/10 min | 2 | 5 | 6 | 7 | 7 |
| Un-notched Izod impact strength | J/m (ft-lb/in) | 160 (3) | 160 (3) | 160 (3) | 215 (4) | 215 (4) |
| Tensile Stress at Yield | MPa (psi) | 59.8 (8670) | 52.1 (7560) | 47.6 (6910) | 46.0 (6670) | 42.5 (6160) |
| Tensile Strain at Break | % | 3 | 3 | 3 | 3 | 4 |
| Tensile Energy to Break | Nm (in-lbf) | 5.3 (47) | 4.6 (41) | 4.4 (39) | 4.1 (36) | 4.2 (37) |
| Rockwell Hardness | R Scale | 122 | 109 | 103 | 97 | 90 |
| Optical Properties | | | | | | |
| ΔRI | | n/a | 0.0017 | 0.0017 | 0.0017 | 0.0017 |
| Haze | % | 1 | 2 | 2 | 9 | 3 |

(continued)

| Optical Properties | | | | | | |
|---|---|---|---|---|---|---|
| Transmittance | % | 93 | 91 | 91 | 90 | 91 |
| Clarity | % | 100 | 100 | 100 | 94 | 99 |

Tables 1 and 2 show that SMMA compositions according to the invention comprising at least one SEBS exhibit improved MFR and further exhibit improved mechanical properties such as tensile energy to break and un-notched Izod impact strength compared to the not impact modified SMMA (Comparative Example C1). Moreover, it can be seen that molding compositions (P) having a ΔRI of less than or equal to 0.02 exhibit superior optical properties (Examples 2 to 5), whereas molding compositions with higher ΔRI are low in transmittance, low in clarity and high in haze (Examples 6 to 8; not in accordance with the invention).

Table 2. Composition and properties of SMMA/SEBS-2 blends of Examples 6 to 8 and Comparative Example C1.

| | Units | Comparative Example | Examples | | |
|---|---|---|---|---|---|
| | | C1 | 6 | 7 | 8 |
| SMMA | % | 100 | 90 | 80 | 70 |
| SEBS-1 | % | 0 | 0 | 0 | 0 |
| SEBS-2 | % | 0 | 10 | 20 | 30 |
| Mechanical Properties | | | | | |
| MFR (200°C, 5 kg) | g/10 min | 2 | 3 | 3 | 3 |
| Un-notched Izod impact strength | J/m (ft-lb/in) | 160 (3) | 215 (4) | 160 (3) | 215 (4) |
| Tensile Stress at Yield | MPa (psi) | 59.8 (8671) | 51.8 (7517) | 49.7 (7214) | 43.2 (6267) |
| Tensile Strain at Break | % | 3 | 11 | 10 | 18 |
| Tensile Energy to Break | Nm in-lbf | 5.3 (47) | 17.1 (151) | 15.6 (138) | 24.7 (219) |
| Rockwell Hardness | R Scale | 122 | 109 | 102 | 93 |
| Optical Properties | | | | | |
| ΔRI | | n/a | 0.0210 | 0.0210 | 0.0210 |
| Haze | % | 1 | 96 | 96 | 99 |
| Transmittance | % | 93 | 51 | 47 | 46 |
| Clarity | % | 100 | 86 | 88 | 80 |

Examples 6 to 8 are not in accordance with the invention.

Table 3. Composition and properties of SMMA/SEBS-1/SEBS-2 blends of Examples 9 to 13.

| | Units | Examples | | | | |
|---|---|---|---|---|---|---|
| | | 9 | 10 | 11 | 12 | 13 |
| SMMA | % | 80.0 | 80.0 | 77.5 | 77.5 | 75.0 |
| SEBS-1 | % | 16.0 | 18.0 | 18.0 | 20.3 | 20.0 |
| SEBS-2 | % | 4.0 | 2.0 | 4.5 | 2.3 | 5.0 |
| Mechanical Properties | | | | | | |
| MFR (200°C, 5 kg) | g/10 min | 4 | 4 | 5 | 5 | 5 |
| Un-notched Izod | J/m Ft-lb/in | 215 (4) | 215 (4) | 215 (4) | 215 (4) | 215 (4) |
| Tensile Stress at Yield | MPa (psi) | 46.8 (6780) | 48.4 (7020) | 43.7 (6340) | 26.2 (3800) | 22.3 (3230) |
| Tensile Strain at Break | % | 3 | 4 | 19 | 4 | 4 |

(continued)

| | | | | | | |
|---|---|---|---|---|---|---|
| Mechanical Properties | | | | | | |
| Tensile Energy to Break | Nm In-lbf | 4.3 (38) | 4.6 (41) | 27.3 (242) | 4.6 (41) | 4.9 (43) |
| Rockwell Hardness | R Scale | 104 | 105 | 99 | 104 | 101 |
| Optical Properties | | | | | | |
| ΔRI | | 0.0026 | 0.0003 | 0.0026 | 0.0002 | 0.0026 |
| Haze | % | 15 | 5 | 33 | 8 | 15 |
| Transmittance | % | 89 | 91 | 83 | 91 | 89 |
| Clarity | % | 99 | 99 | 96 | 99 | 99 |

Tables 3 to 5 demonstrate the properties of SMMA compositions comprising one SEBS with a high styrene content (SEBS-1) and one SEBS with a low styrene content (SEBS-2). It was particularly surprising that these compositions combine improved mechanical properties with good optical properties (Ex. 9 to 24). Again, molding compositions (P) having a ΔRI of less than or equal to 0.02 exhibit superior optical properties (Examples 9 to 24), which is further improved for molding compositions having a ΔRI of less than or equal to 0.008, in particular 0.006 (Examples 9 to 19, 21, 23), whereas molding compositions with higher ΔRI are inferior with respect to transmittance, clarity and haze (Examples 20, 22, 24).

Table 4. Composition and properties of SMMA/SEBS-1/SEBS-2 blends of Examples 14 to 18.

| | Units | Examples | | | | |
|---|---|---|---|---|---|---|
| | | 14 | 15 | 16 | 17 | 18 |
| SMMA | % | 75.0 | 72.5 | 72.5 | 70.0 | 85.0 |
| SEBS-1 | % | 22.5 | 22.0 | 24.8 | 24.0 | 10.0 |
| SEBS-2 | % | 2.5 | 5.5 | 2.8 | 6.0 | 5.0 |
| Mechanical Properties | | | | | | |
| MFR (200°C, 5 kg) | g/10 min | 5 | 5 | 5 | 6 | 4 |
| Un-notched Izod | J/m Ft-lb/in | 215 (4) | 215 (4) | 160 (3) | 215 (4) | 215 (4) |
| Tensile Stress at Yield | MPa (psi) | 22.4 (3250) | 44.7 (6490) | 16.0 (2320) | 42.3 (6130) | 51.5 (7480) |
| Tensile Strain at Break | % | 3 | 13 | 4 | 15 | 13 |
| Tensile Energy to Break | Nm In-lbf | 4.4 (39) | 18.8 (166) | 4.5 (40) | 20.6 (182) | 20.8 (184) |
| Rockwell Hardness | R Scale | 102 | 100 | 100 | 97 | 108 |
| Optical Properties | | | | | | |
| ΔRI | | 0.0003 | 0.0026 | 0.0003 | 0.0026 | 0.0057 |
| Haze | % | 6 | 15 | 5 | 16 | 27 |
| Transmittance | % | 91 | 89 | 91 | 88 | 83 |
| Clarity | % | 99 | 99 | 99 | 99 | 99 |

Table 5. Composition and properties of SMMA/SEBS-1/SEBS-2 blends of Examples 19 to 24.

| | Units | Examples | | | | | |
|---|---|---|---|---|---|---|---|
| | | 19 | 20 | 21 | 22 | 23 | 24 |
| SMMA | % | 80.0 | 80.0 | 75.0 | 75.0 | 70.0 | 60.0 |
| SEBS-1 | % | 15.0 | 10.0 | 20.0 | 15.0 | 20.0 | 20.0 |
| SEBS-2 | % | 5.0 | 10.0 | 5.0 | 10.0 | 10.0 | 20.0 |

(continued)

| Mechanical Properties | | | | | | | |
|---|---|---|---|---|---|---|---|
| MFR (200°C, 5 kg) | g/10 min | 4 | 4 | 5 | 5 | 6 | 6 |
| Un-notched Izod | J/m (Ft-lb/in) | 215 (4) | 215 (4) | 215 (4) | 215 (4) | 160 (3) | 480 (9) |
| Tensile Stress at Yield | MPa psi | 47.4 (6880) | 46.9 (6810) | 45.4 (6590) | 43.6 (6330) | 41.4 (6000) | 33.7 (4880) |
| Tensile Strain at Break | % | 14 | 14 | 16 | 19 | 15 | 19 |
| Tensile Energy to Break | Nm (in-lbf) | 21.0 (186) | 20.9 (184) | 23.4 (207) | 26.7 (236) | 20.1 (178) | 22.3 (197) |
| Rockwell Hardness | R Scale | 105 | 103 | 101 | 99 | 96 | 84 |
| Optical Properties | | | | | | | |
| ΔRI | | 0.0037 | 0.0095 | 0.0026 | 0.0072 | 0.0057 | 0.0095 |
| Haze | % | 21 | 56 | 16 | 47 | 37 | 69 |
| Transmittance | % | 87 | 74 | 88 | 78 | 81 | 69 |
| Clarity | % | 99 | 97 | 99 | 98 | 98 | 95 |

Furthermore, it was surprisingly found that the compositions according to the invention exhibit excellent light stability in UV stability tests according to AATCC TM16.3 (cf. Table 6). The composition of Ex. 15 exceeds the results for commercially used impact modified compositions of Ref. 1 and Ref. 2 as well as the pure SMMA composition of Comparative Example C1.

Table 6. Comparison of UV stability of Examples 1 and 15 with Reference Examples Ref. 1 and Ref. 2

| | | Comparative Example | Example | Reference Examples | |
|---|---|---|---|---|---|
| | Units | C1 | 15 | Ref. 1 | Ref. 2 |
| 0 Hours | | | | | |
| YI | unitless | 0.5 | 2.9 | 1.2 | 1.2 |
| L* | unitless | 96.3 | 94.8 | 95.7 | 95.9 |
| a* | unitless | 0.1 | 0.2 | 0.0 | 0.1 |
| b* | unitless | 0.2 | 1.4 | 0.6 | 0.6 |
| 300 Hours | | | | | |
| YI | unitless | 0.9 | 3.0 | 5.0 | 3.5 |
| ΔYI | unitless | 0.4 | 0.2 | 3.8 | 2.3 |
| L* | unitless | 96.3 | 94.7 | 95.6 | 95.9 |
| a* | unitless | 0.0 | 0.1 | -0.7 | -0.4 |
| b* | unitless | 0.5 | 1.5 | 2.9 | 2.0 |
| ΔE | unitless | 0.3 | 0.2 | 2.4 | 1.5 |
| 600 Hours | | | | | |
| YI | unitless | 1.2 | 3.4 | 7.7 | 4.9 |
| ΔYI | unitless | 0.7 | 0.5 | 6.5 | 3.7 |
| L* | unitless | 96.2 | 94.8 | 95.4 | 95.7 |
| a* | unitless | -0.1 | 0.0 | -1.1 | -0.6 |
| b* | unitless | 0.7 | 1.8 | 4.5 | 2.8 |

(continued)

| | | | | | |
|---|---|---|---|---|---|
| 600 Hours | | | | | |
| ΔE | unitless | 0.5 | 0.4 | 4.0 | 2.4 |

The evaluation of light stability of the compositions according to Comparative Example C1 and Example 15 as well as Reference Examples Ref. 1 and Ref. 2 as shown in Table 6 clearly demonstrate a substantial improvement in light stability of the pure SMMA composition of Comparative Example C1 compared to Ref. 1 and Ref. 2. This improvement is even further increased for the composition according to the present invention as evidenced by the light stability of the composition according to Example 15 which, in contrast to Comparative Example C1, is impact modified and therefore exhibits superior mechanical properties (cf. Tables 1 to 5).

## Claims

**1.** Molding composition (P) comprising or consisting of components (a), (b), and (c):

(a) 30 to 82 wt.-% of at least one random copolymer component (a) made from 30 to 70 wt.-% of at least one vinylaromatic monomer (a11), in particular styrene, and 30 to 70 wt.-%, methyl methacrylate (a12);
(b) 18 to 70 wt.-% of at least one block copolymer (b) which comprises:

at least one hard block H, comprising repeating units of vinyl aromatic monomers, in particular styrene, and
at least one elastomeric soft block $S_1$, comprising repeating units of olefinic monomers, preferably ethylene and at least one olefinic monomer having 3 to 10 carbon atoms, and/or
at least one soft block $S_2$ comprising repeating units of olefinic monomers and vinylaromatic monomers, in particular ethylene, at least one olefinic monomer having 3 to 10 carbon atoms and styrene,
wherein the proportion of repeating units of the vinyl aromatic monomers - based on the entire block copolymer (b) - is from 25 to 85 wt.-%;
wherein the at least one block copolymer (b) comprises at least one block copolymer (b-1) which comprises:

at least one hard block H, comprising repeating units of vinyl aromatic monomers, in particular styrene, and
at least one elastomeric soft block $S_1$, comprising repeating units of olefinic monomers, preferably ethylene and at least one olefinic monomer having 3 to 10 carbon atoms, and/or
at least one soft block $S_2$ comprising repeating units of olefinic monomers and vinylaromatic monomers, in particular ethylene, at least one olefinic monomer having 3 to 10 carbon atoms and styrene,
wherein the proportion of the repeating units of vinyl aromatic monomers - based on the entire block copolymer (b-1) - is from 55 to 85 wt.-%;
and
wherein the olefinic monomers are mono-functional olefinic monomers having one terminal C-C double bond;
and

(c) 0 to 2 wt.-% of one or more additive(s) and/or processing aid(s) (c);
wherein the total amount of components (a), (b), and (c) is 100 wt.-%, and
wherein the molding composition (P) has a clarity determined according to ASTM D1003 for a 3.2mm thickness specimen of more than 90%.

**2.** Molding composition (P) according to claim 1, wherein the elastomeric soft block $S_1$ comprises repeating units of ethylene and at least one olefinic monomer selected from propylene and butylene, more preferably ethylene and butylene; and wherein the at least one soft block $S_2$ comprises repeating units of ethylene, at least one olefinic monomer selected from propylene and butylene, and styrene, more preferably ethylene, butylene and styrene.

**3.** Molding composition (P) according to claim 1 or 2 comprising as block copolymer component (b):

(b-1) at least one block copolymer (b-1) which comprises:

at least one hard block H, comprising repeating units of vinyl aromatic monomers, in particular styrene, and at least one elastomeric soft block $S_1$, comprising repeating units of olefinic monomers, in particular ethylene and butylene,
wherein the proportion of the repeating units of vinyl aromatic monomers - based on the entire block copolymer (b-1) - is from 55 to 85 wt.-%, preferably from 55 to 80 wt.-%, often from 60 to 75 wt.-%; and

(b-2) optionally at least one block copolymer (b-2) which comprises:

at least one hard block H, comprising repeating units of vinyl aromatic monomers, in particular styrene, and at least one elastomeric soft block $S_1$, comprising repeating units of olefinic monomers, in particular ethylene and butylene,
wherein the proportion of the vinyl aromatic monomers - based on the entire block copolymer (b-2) - is from 25 to 54 wt.-%, preferably from 30 to 54 wt.-%, often from 35 to 50 wt.-%.

**4.** Molding composition (P) according to claim 3, wherein component (b) comprises or consists of:

(b-1) 45 to 95 wt.-%, based on the total weight of component (b), of the at least one block copolymer (b-1); and
(b-2) 5 to 55 wt.-%, based on the total weight of component (b), of the at least one

**5.** Molding composition (P) according to claim 3 comprising:

68 to 79 wt.-%, preferably 69 to 76.9 wt.-%, often 69.6 to 75.5 wt.-%, of at least one random copolymer component (a)
18 to 29 wt.-%, preferably 19 to 26.9 wt.-%, often 19.6 to 25.5 wt.-%, of at least one block copolymer (b-1),
3 to 14 wt.-%, preferably 4 to 11.9 wt.-%, often 4.6 to 6.5 wt.-%, of at least one block copolymer (b-2), and
0 to 2 wt.-%, preferably 0.1 to 2 wt.-%, often 0.3 to 2 wt.-%, of at least one component (c)
wherein the total amount of components (a), (b-1), (b-2) and (c) is 100 wt.-%.

**6.** Molding composition (P) according to any of claims 1 to 5, wherein the values of the refractive index of components (a) and (b) are within the range of from 1.52 to 1.57 at 589.3 nm, determined analogously to ASTM C 1648-12.

**7.** Molding composition (P) according to any of claims 1 to 6, wherein random copolymer (a) is comprising from 48 to 60 wt.-%, preferably 50 to 58 wt.-%, vinylaromatic monomer (a11), in particular styrene, and 40 to 52 wt.-%, preferably 42 to 50 wt.-%, methyl methacrylate (a12).

**8.** Molding composition (P) according to any of claims 1 to 7, wherein component (b) is obtained by hydrogenation of non-conjugated double bonds of vinylaromatic-diene block copolymers (b'), which comprise at least one hard block H' made from vinylaromatic monomers, and at least one soft block $S_1$' made from dienes, and/or at least one soft block $S_2$' made from dienes and vinylaromatic monomers.

**9.** Molding composition (P) according to any of claims 1 to 8, wherein component (b) is a linear block copolymer with two terminal hard blocks H and, at least one soft block $S_1$ and/or at least one soft block $S_2$.

**10.** Molding composition (P) according to any of claims 1 to 9, wherein the refractive index difference $\Delta$RI (at 589.3 nm) of components (a) and (b) is $\leq 0.02$, preferably $\leq 0.01$.

**11.** Molding composition (P) according to any of claims 1 to 10, wherein the molding composition (P) is **characterized by** having:

(i) less than 2.0 units of yellowness index increase after UV stability testing (600 hours);
(ii) less than 2.0 units of color change ($\Delta$E) after UV stability testing (600 hours);
(iii) less than 20% haze determined according to ASTM D1003 for injection molded plaques having a thickness of 3.2 mm (0.125 in); and
(iv) more than 17 Nm tensile energy to break;
wherein the UV stability testing is conducted according to AATCC TM16.3, and
wherein yellowness index is calculated according to ASTM E313 from measured CIELAB color space values, which are measured using a D65 light source (observation angle 10°) according to ASTM E1348,
wherein color change ($\Delta$E) is calculated according to ASTM D2244 from measured CIELAB color space values,

which are measured using a D65 light source (observation angle 10°) according to ASTM E1348, and wherein tensile energy to break is determined according to ASTM D638-14.

**12.** Process for the preparation of a molding composition (P) according to any of claims 1 to 11 wherein components (a) and (b) and, if appropriate, component (c) are melt-mixed, preferably by extrusion.

**13.** Shaped article produced from the molding composition (P) according to any of claims 1 to 11.

**14.** Use of the molding composition (P) according to any of claims 1 to 11 or of a shaped article according to claim 13 for housewares and home appliances.

**Patentansprüche**

**1.** Formmasse (P), umfassend oder bestehend aus den Komponenten (a), (b) und (c):

(a) 30 bis 82 Gew.-% mindestens einer statistischen Copolymerkomponente (a), hergestellt aus 30 bis 70 Gew.-% mindestens eines vinylaromatischen Monomers (a11), insbesondere Styrol, und 30 bis 70 Gew.-% Methylmethacrylat (a12);
(b) 18 bis 70 Gew.-% mindestens eines Blockcopolymers (b), das umfasst:

mindestens einen Hartblock H, der Wiederholungseinheiten von vinylaromatischen Monomeren, insbesondere Styrol, umfasst, und
mindestens einen elastomeren Weichblock $S_1$, der Wiederholungseinheiten von olefinischen Monomeren, vorzugsweise Ethylen und mindestens einem olefinischen Monomer mit 3 bis 10 Kohlenstoffatomen, umfasst, und/oder
mindestens einen Weichblock $S_2$, der Wiederholungseinheiten von olefinischen Monomeren und vinylaromatischen Monomeren, insbesondere Ethylen, mindestens ein olefinisches Monomer mit 3 bis 10 Kohlenstoffatomen und Styrol umfasst,
wobei der Anteil an Wiederholungseinheiten der vinylaromatischen Monomere - bezogen auf das gesamte Blockcopolymer (b) - 25 bis 85 Gew.-% beträgt;
wobei das mindestens eine Blockcopolymer (b) mindestens ein Blockcopolymer (b-1) umfasst, welches umfasst:

mindestens einen Hartblock H, der Wiederholungseinheiten von vinylaromatischen Monomeren, insbesondere Styrol, umfasst, und
mindestens einen elastomeren Weichblock $S_1$, der Wiederholungseinheiten von olefinischen Monomeren, vorzugsweise Ethylen und mindestens einem olefinischen Monomer mit 3 bis 10 Kohlenstoffatomen, umfasst, und/oder
mindestens einen Weichblock $S_2$, der Wiederholungseinheiten von olefinischen Monomeren und vinylaromatischen Monomeren, insbesondere Ethylen, mindestens ein olefinisches Monomer mit 3 bis 10 Kohlenstoffatomen und Styrol umfasst,
wobei der Anteil an Wiederholungseinheiten von vinylaromatischen Monomeren - bezogen auf das gesamte Blockcopolymer (b-1) - 55 bis 85 Gew.-% beträgt;
und
wobei die olefinischen Monomere monofunktionelle olefinische Monomere mit einer endständigen C-C-Doppelbindung sind;
und

(c) 0 bis 2 Gew.-% eines oder mehrerer Additive(s) und/oder Verarbeitungshilfsmittel(s) (c);
wobei die Gesamtmenge der Komponenten (a), (b) und (c) 100 Gew.-% beträgt und
wobei die Formmasse (P) eine gemäß ASTM D1003 bestimmte Klarheit für eine Probe mit einer Dicke von 3,2 mm von mehr als 90 % aufweist.

**2.** Formmasse (P) nach Anspruch 1, wobei der elastomere Weichblock $S_1$ Wiederholungseinheiten aus Ethylen und mindestens einem olefinischen Monomer, ausgewählt aus Propylen und Butylen, vorzugsweise Ethylen und Butylen, umfasst; und wobei der mindestens eine Weichblock $S_2$ Wiederholungseinheiten aus Ethylen, mindestens einem olefinischen Monomer, ausgewählt aus Propylen und Butylen, und Styrol, vorzugsweise Ethylen, Butylen und Styrol,

umfasst.

3. Formmasse (P) gemäß Anspruch 1 oder 2, umfassend als Blockcopolymerkomponente (b):

(b-1) mindestens ein Blockcopolymer (b-1), das umfasst:

mindestens einen Hartblock H, der Wiederholungseinheiten von vinylaromatischen Monomeren, insbesondere Styrol, umfasst, und
mindestens einen elastomeren Weichblock $S_1$, der Wiederholungseinheiten von olefinischen Monomeren, insbesondere Ethylen und Butylen, umfasst,
wobei der Anteil der Wiederholungseinheiten von vinylaromatischen Monomeren - bezogen auf das gesamte Blockcopolymer (b-1) - 55 bis 85 Gew.-%, vorzugsweise 55 bis 80 Gew.-%, häufig 60 bis 75 Gew.-% beträgt; und

(b-2) optional mindestens ein Blockcopolymer (b-2), das umfasst:

mindestens einen Hartblock H, der Wiederholungseinheiten von vinylaromatischen Monomeren, insbesondere Styrol, umfasst, und
mindestens einen elastomeren Weichblock $S_1$, der Wiederholungseinheiten von olefinischen Monomeren, insbesondere Ethylen und Butylen, umfasst,
wobei der Anteil der vinylaromatischen Monomere - bezogen auf das gesamte Blockcopolymer (b-2) - 25 bis 54 Gew.-%, vorzugsweise 30 bis 54 Gew.-%, häufig 35 bis 50 Gew.-% beträgt.

4. Formmasse (P) gemäß Anspruch 3, wobei Komponente (b) Folgendes umfasst oder daraus besteht:

(b-1) 45 bis 95 Gew.-%, bezogen auf das Gesamtgewicht der Komponente (b), des mindestens einen Blockcopolymers (b-1); und
(b-2) 5 bis 55 Gew.-%, bezogen auf das Gesamtgewicht der Komponente (b), des mindestens einen Blockcopolymers (b-2).

5. Formmasse (P) gemäß Anspruch 3, umfassend:

68 bis 79 Gew.-%, vorzugsweise 69 bis 76,9 Gew.-%, häufig 69,6 bis 75,5 Gew.-%, mindestens einer statistischen Copolymerkomponente (a),
18 bis 29 Gew.-%, vorzugsweise 19 bis 26,9 Gew.-%, häufig 19,6 bis 25,5 Gew.-%, mindestens eines Blockcopolymers (b-1),
3 bis 14 Gew.-%, vorzugsweise 4 bis 11,9 Gew.-%, häufig 4,6 bis 6,5 Gew.-%, mindestens eines Blockcopolymers (b-2) und
0 bis 2 Gew.-%, vorzugsweise 0,1 bis 2 Gew.-%, häufig 0,3 bis 2 Gew.-%, mindestens einer Komponente (c),
wobei die Gesamtmenge der Komponenten (a), (b-1), (b-2) und (c) 100 Gew.-% beträgt.

6. Formmasse (P) nach einem der Ansprüche 1 bis 5, wobei die Werte des Brechungsindexes der Komponenten (a) und (b) im Bereich von 1,52 bis 1,57 bei 589,3 nm liegen, bestimmt analog zu ASTM C 1648-12.

7. Formmasse (P) nach einem der Ansprüche 1 bis 6, wobei das statistische Copolymer (a) 48 bis 60 Gew.-%, vorzugsweise 50 bis 58 Gew.-%, vinylaromatisches Monomer (a11), insbesondere Styrol, und 40 bis 52 Gew.-%, vorzugsweise 42 bis 50 Gew.-%, Methylmethacrylat (a12) umfasst.

8. Formmasse (P) nach einem der Ansprüche 1 bis 7, wobei die Komponente (b) durch Hydrierung von nichtkonjugierten Doppelbindungen von vinylaromatisch-dienischen Blockcopolymeren (b') erhalten wird, die mindestens einen Hartblock H' aus vinylaromatischen Monomeren und mindestens einen Weichblock $S_1$' aus Dienen und/oder mindestens einem Weichblock $S_2$' aus Dienen und vinylaromatischen Monomeren besteht.

9. Formmasse (P) nach einem der Ansprüche 1 bis 8, wobei die Komponente (b) ein lineares Blockcopolymer mit zwei endständigen Hartblöcken H und mindestens einem Weichblock $S_1$ und/oder mindestens einem Weichblock $S_2$ ist.

10. Formmasse (P) nach einem der Ansprüche 1 bis 9, wobei die Brechungsindexdifferenz $\Delta$RI (bei 589,3 nm) der Komponenten (a) und (b) $\leq$ 0,02, vorzugsweise $\leq$ 0,01 ist.

**11.** Formmasse (P) nach einem der Ansprüche 1 bis 10, wobei die Formmasse (P) **dadurch gekennzeichnet ist, dass** sie:

(i) einen Anstieg des Gelbindex nach UV-Stabilitätsprüfung (600 Stunden) von weniger als 2,0 Einheiten;
(ii) eine Farbänderung (ΔE) nach UV-Stabilitätsprüfung (600 Stunden) von weniger als 2,0 Einheiten;
(iii) eine Trübung gemäß ASTM D1003 für spritzgegossene Platten mit einer Dicke von 3,2 mm (0,125 Zoll) von weniger als 20 %; und
(iv) eine Zugfestigkeit bis zum Bruch von mehr als 17 Nm;

aufweist,

wobei die UV-Stabilitätsprüfung gemäß AATCC TM16.3 durchgeführt wird und
wobei der Gelbindex gemäß ASTM E313 aus gemessenen CIELAB-Farbraumwerten berechnet wird, die unter Verwendung einer D65-Lichtquelle (Beobachtungswinkel 10°) gemäß ASTM E1348 gemessen werden,
wobei die Farbänderung (ΔE) gemäß ASTM D2244 aus den gemessenen CIELAB-Farbraumwerten berechnet wird, die unter Verwendung einer D65-Lichtquelle (Beobachtungswinkel 10°) gemäß ASTM E1348 gemessen werden, und
wobei die Bruchzugfestigkeit gemäß ASTM D638-14 bestimmt wird.

**12.** Verfahren zur Herstellung einer Formmasse (P) gemäß einem der Ansprüche 1 bis 11, wobei die Komponenten (a) und (b) und gegebenenfalls die Komponente (c) vorzugsweise durch Extrusion schmelzgemischt werden.

**13.** Formkörper, hergestellt aus der Formmasse (P) gemäß einem der Ansprüche 1 bis 11.

**14.** Verwendung der Formmasse (P) gemäß einem der Ansprüche 1 bis 11 oder eines Formkörpers gemäß Anspruch 13 für Haushaltswaren und Haushaltsgeräte.

## Revendications

**1.** Composition de moulage (P) comprenant ou consistant des composants (a), (b) et (c) :

(a) 30 à 82 % en poids d'au moins un composant de copolymère statistique (a) constitué de 30 à 70 % en poids d'au moins un monomère vinylaromatique (a11), en particulier le styrène, et de 30 à 70 % en poids de méthacrylate de méthyle (a12) ;
(b) 18 à 70 % en poids d'au moins un copolymère avec séquence (b) qui comprend :

au moins un bloc dur H, comprenant des motifs répétitifs de monomères vinylaromatiques, en particulier le styrène, et
au moins un bloc souple élastomère $S_1$, comprenant des motifs répétitifs de monomères oléfiniques, de préférence l'éthylène et au moins un monomère oléfinique ayant 3 à 10 atomes de carbone, et/ou
au moins un bloc souple $S_2$ comprenant des motifs répétitifs de monomères oléfiniques et de monomères vinylaromatiques, en particulier l'éthylène, au moins un monomère oléfinique ayant 3 à 10 atomes de carbone et le styrène,
la proportion des unités répétitives des monomères vinylaromatiques - par rapport à l'ensemble du copolymère à blocs (b) - étant comprise entre 25 et 85 % en poids ;
dans lequel le au moins un copolymère avec séquence (b) comprend au moins un copolymère séquencé (b-1) qui comprend :

au moins un bloc dur H, comprenant des motifs répétitifs de monomères vinylaromatiques, en particulier du styrène, et
au moins un bloc souple élastomère $S_1$, comprenant des motifs répétitifs de monomères oléfiniques, de préférence l'éthylène et au moins un monomère oléfinique ayant 3 à 10 atomes de carbone, et/ou
au moins un bloc souple $S_2$ comprenant des motifs répétitifs de monomères oléfiniques et de monomères vinylaromatiques, en particulier l'éthylène, au moins un monomère oléfinique ayant 3 à 10 atomes de carbone et le styrène,
la proportion des unités répétitives de monomères vinylaromatiques - par rapport à l'ensemble du copolymère à blocs (b-1) - étant comprise entre 55 et 85 % en poids ;

et
dans lequel les monomères oléfiniques sont des monomères oléfiniques monofonctionnels ayant une double liaison C-C terminale ;
et

(c) 0 à 2 % en poids d'un ou plusieurs additifs et/ou adjuvants de mise en oeuvre (c) ; dans laquelle la quantité totale des composants (a), (b) et (c) est de 100 % en poids, et dans laquelle la composition de moulage (P) a une transparence déterminée selon la norme ASTM D1003 pour un échantillon de 3,2 mm d'épaisseur supérieure à 90 %.

**2.** Composition de moulage (P) selon la revendication 1, dans laquelle le bloc souple élastomère $S_1$ comprend des unités répétitives d'éthylène et d'au moins un monomère oléfinique choisi parmi le propylène et le butylène, de préférence l'éthylène et le butylène ; et dans laquelle le au moins un bloc souple $S_2$ comprend des unités répétitives d'éthylène, d'au moins un monomère oléfinique choisi parmi le propylène et le butylène, et le styrène, de préférence l'éthylène, le butylène et le styrène.

**3.** Composition de moulage (P) selon la revendication 1 ou 2 comprenant comme composant copolymère à blocs (b) :

(b-1) au moins un copolymère à blocs (b-1) qui comprend :

au moins un bloc dur H, comprenant des unités répétitives de monomères vinylaromatiques, en particulier le styrène, et
au moins un bloc souple élastomère $S_1$, comprenant des motifs répétitifs de monomères oléfiniques, en particulier l'éthylène et le butylène,
dans lequel la proportion des unités répétitives de monomères vinylaromatiques - par rapport à l'ensemble du copolymère séquencé (b-1) - est comprise entre 55 et 85 % en poids, de préférence entre 55 et 80 % en poids, souvent entre 60 et 75 % en poids ; et

(b-2) éventuellement au moins un copolymère séquencé (b-2) qui comprend :

au moins un bloc dur H, comprenant des unités répétitives de monomères vinylaromatiques, en particulier le styrène, et
au moins un bloc souple élastomère $S_1$, comprenant des motifs répétitifs de monomères oléfiniques, en particulier l'éthylène et le butylène,
dans lequel la proportion des monomères vinylaromatiques, par rapport à l'ensemble du copolymère séquencé (b-2), est comprise entre 25 et 54 % en poids, de préférence entre 30 et 54 % en poids, souvent entre 35 et 50 % en poids.

**4.** Composition de moulage (P) selon la revendication 3, dans laquelle le composant (b) comprend ou consiste en un :

(b-1) 45 à 95 % en poids, par rapport au poids total du composant (b), d'au moins un copolymère à blocs (b-1) ; et
(b-2) 5 à 55 % en poids, par rapport au poids total du composant (b), d'au moins un copolymère séquencé (b-2).

**5.** Composition de moulage (P) selon la revendication 3, comprenant :

68 à 79 % en poids, de préférence 69 à 76,9 % en poids, souvent 69,6 à 75,5 % en poids, d'au moins un composant de copolymère statistique (a),
18 à 29 % en poids, de préférence 19 à 26,9 % en poids, souvent 19,6 à 25,5 % en poids, d'au moins un copolymère séquencé (b-1),
3 à 14 % en poids, de préférence 4 à 11,9 % en poids, souvent 4,6 à 6,5 % en poids, d'au moins un copolymère séquencé (b-2), et
0 à 2 % en poids, de préférence 0,1 à 2 % en poids, souvent 0,3 à 2 % en poids, d'au moins un composant (c), dans lequel la quantité totale des composants (a), (b-1), (b-2) et (c) est de 100 % en poids.

**6.** Composition de moulage (P) selon l'une quelconque des revendications 1 à 5, dans laquelle les valeurs de l'indice de réfraction des composants (a) et (b) sont comprises dans la plage de 1,52 à 1,57 à 589,3 nm, déterminées de manière analogue à la norme ASTM C 1648-12.

**7.** Composition de moulage (P) selon l'une quelconque des revendications 1 à 6, dans laquelle le copolymère statistique (a) comprend de 48 à 60 % en poids, de préférence de 50 à 58 % en poids, de monomère vinylaromatique (a11), en particulier du styrène, et de 40 à 52 % en poids, de préférence de 42 à 50 % en poids, de méthacrylate de méthyle (a12).

**8.** Composition de moulage (P) selon l'une quelconque des revendications 1 à 7, dans laquelle le composant (b) est obtenu par hydrogénation des doubles liaisons non conjuguées de copolymères séquencés vinylaromatiques-diènes (b'), qui comprennent au moins un bloc dur H' constitué de monomères vinylaromatiques, et au moins un bloc souple $S_1$' constitué de diènes, et/ou au moins un bloc souple $S_2$' constitué de diènes et de monomères vinylaromatiques.

**9.** Composition de moulage (P) selon l'une quelconque des revendications 1 à 8, dans laquelle le composant (b) est un copolymère séquencé linéaire comportant deux blocs durs terminaux H et au moins un bloc souple $S_1$ et/ou au moins un bloc souple $S_2$.

**10.** Composition de moulage (P) selon l'une quelconque des revendications 1 à 9, dans laquelle la différence d'indice de réfraction $\Delta$RI (à 589,3 nm) des composants (a) et (b) est $\leq$ 0,02, de préférence $\leq$ 0,01.

**11.** Composition de moulage (P) selon l'une quelconque des revendications 1 à 10, dans laquelle la composition de moulage (P) est **caractérisée en ce qu'**elle comprend :

(i) une augmentation de l'indice de jaunissement inférieure à 2,0 unités après un test de stabilité aux UV (600 heures) ;
(ii) moins de 2,0 unités de changement de couleur ($\Delta$E) après un test de stabilité aux UV (600 heures) ;
(iii) moins de 20 % de voile déterminé selon la norme ASTM D1003 pour les plaques moulées par injection d'une épaisseur de 3,2 mm (0,125 pouce) ; et
(iv) une énergie de rupture supérieure à 17 Nm ;
où le test de stabilité aux UV est effectué selon la norme AATCC TM16.3, et
dans lequel l'indice de jaunissement est calculé selon la norme ASTM E313 à partir des valeurs de l'espace colorimétrique CIELAB mesurées à l'aide d'une source lumineuse D65 (angle d'observation 10°) selon la norme ASTM E1348,
dans lequel le changement de couleur ($\Delta$E) est calculé selon la norme ASTM D2244 à partir des valeurs de l'espace colorimétrique CIELAB mesurées à l'aide d'une source lumineuse D65 (angle d'observation de 10°) conformément à la norme ASTM E1348, et dans lequel l'énergie de rupture est déterminée selon la norme ASTM D638-14.

**12.** Procédé de préparation d'une composition de moulage (P) selon l'une quelconque des revendications 1 à 11, dans lequel les composants (a) et (b) et, le cas échéant, le composant (c) sont mélangés à l'état fondu, de préférence par extrusion.

**13.** Article moulé produit à partir de la composition de moulage (P) selon l'une quelconque des revendications 1 à 11.

**14.** Utilisation de la composition de moulage (P) selon l'une quelconque des revendications 1 à 11 ou d'un article moulé selon la revendication 13 pour des articles ménagers et des appareils électroménagers.

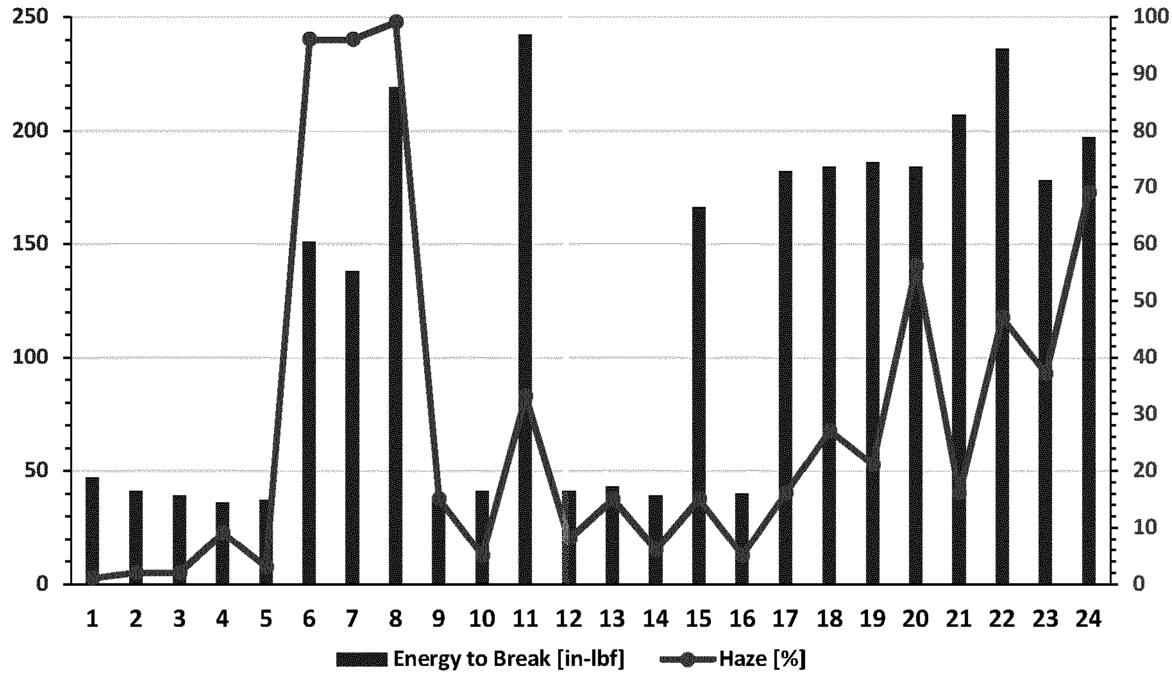
250
200
150
100
50
0
100
90
80
70
60
50
40
30
20
10
0
1 2 3 4 5 6 7 8 9 10 11 12 13 14 15 16 17 18 19 20 21 22 23 24
Energy to Break [in-lbf]
Haze [%]

FIG. 1

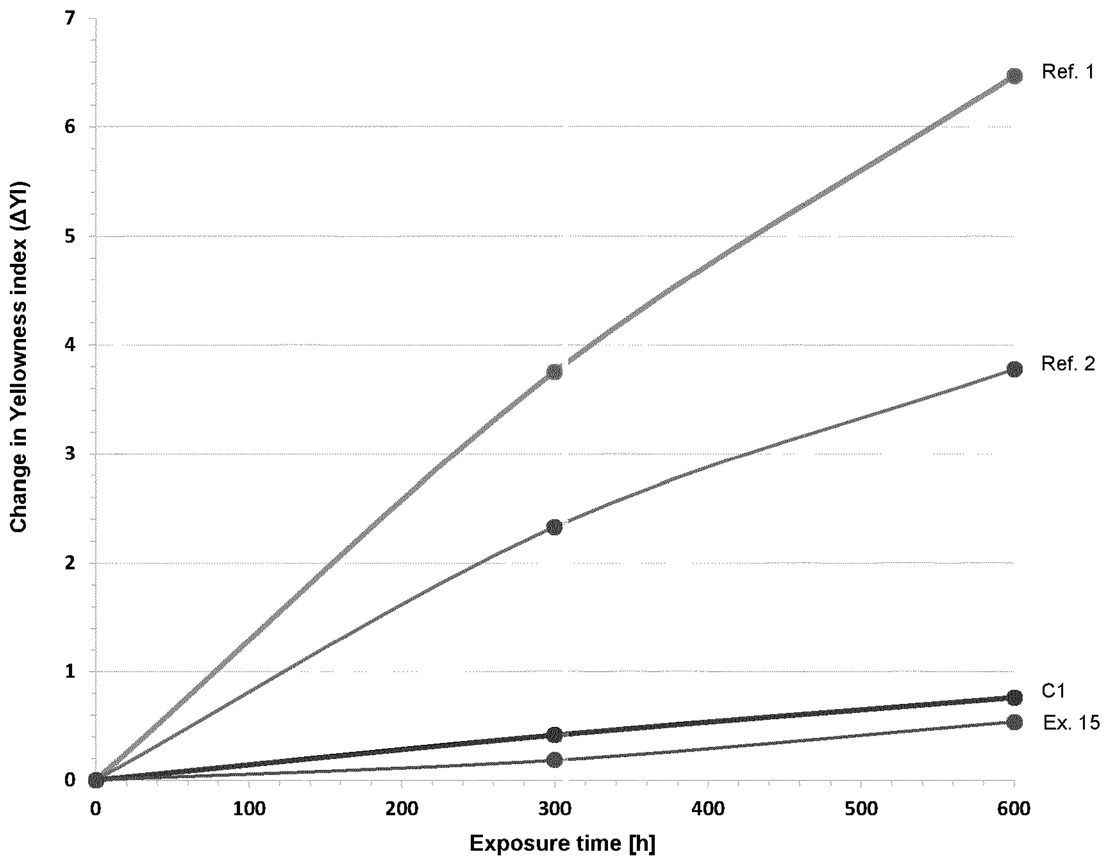
Change in Yellowness index (ΔYI)
7
6
5
4
3
2
1
0
0
100
200
300
400
500
600
Exposure time [h]
Ref. 1
Ref. 2
C1
Ex. 15

FIG. 2

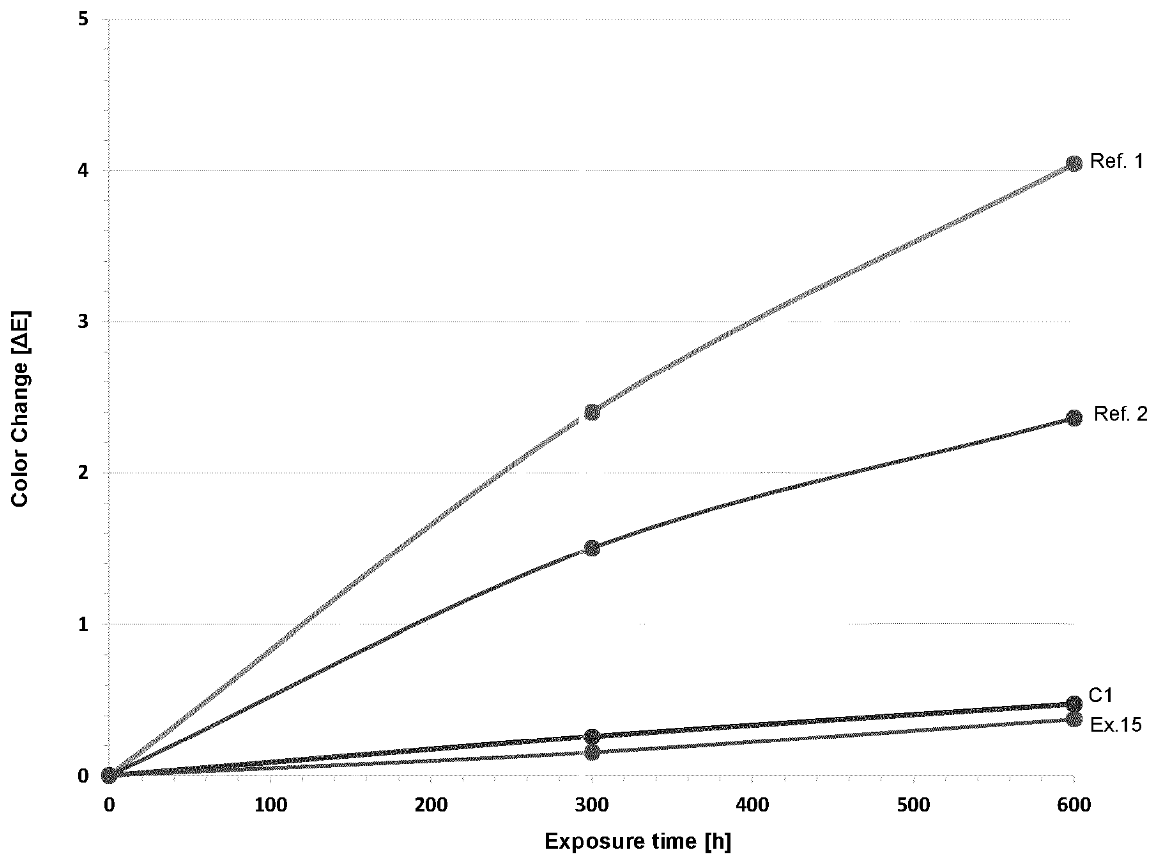
Color Change [ΔE]
5
4
3
2
1
0
0
100
200
300
400
500
600
Exposure time [h]
Ref. 1
Ref. 2
C1
Ex.15

FIG. 3

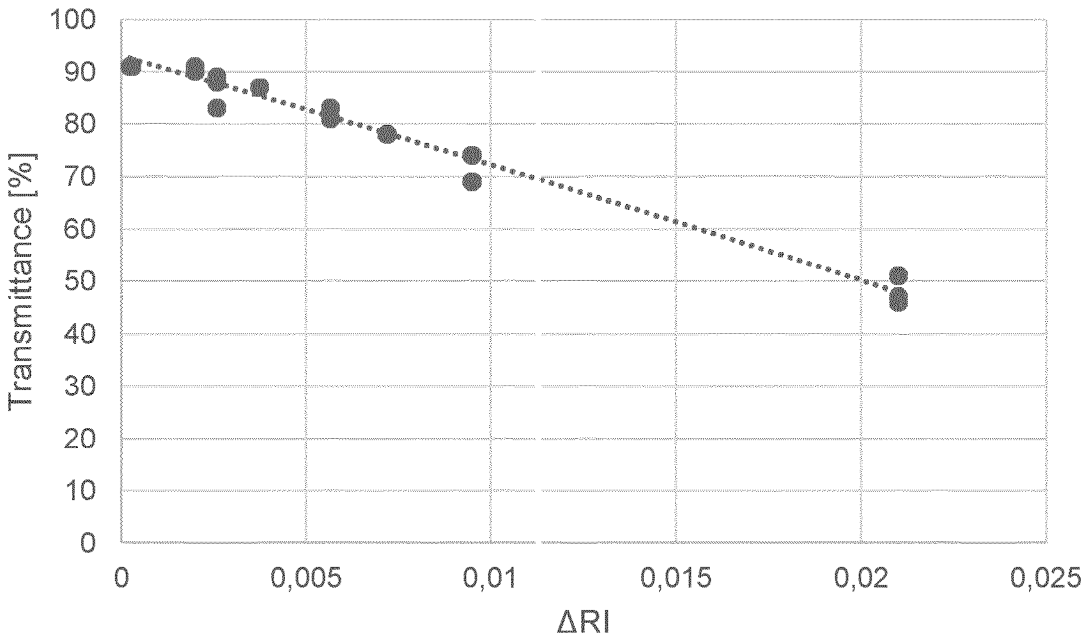
Transmittance [%]
100
90
80
70
60
50
40
30
20
10
0
0
0,005
0,01
0,015
0,02
0,025
ΔRI

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2005023267 A
- JP 2002234981 A
- US 6521712 B
- US 20150031835 A1

### Non-patent literature cited in the description

- Polystyrol. Kunststoffhandbuch. Carl-Hanser-Verlag, 1969, vol. V, 118
- Modern Styrenic Polymers: Polystyrenes and Styrenic Copolymers. Wiley, 2003, 502-507
- **HANS ZWEIFEL**. Plastics Additives Handbook. Hanser Publ., 2009